# EUROPEAN PATENT SPECIFICATION

(11) **EP 1 795 544 B1**
(45) Date of publication and mention of the grant of the patent: **27.01.2010**
(21) Application number: 07100254.7
(22) Date of filing: 01.07.1998
(51) Int. Cl.: C08F 26/06, C09J 11/00, C09J 133/00, C08F 20/00, C08F 220/00

(54) **High temperature, controlled strength anaerobic adhesive compositions curable under ambient environmental conditions**
ANAEROBE KLEBSTOFFZUSAMMENSETZUNGEN KONTROLLIERTER STÄRKE FÜR HOHE TEMPERATUREN WELCHE BEI UMGEBUNGSBEDINGUNGEN HÄRTBAR SIND
COMPOSITIONS ADHESIVES ANAEROBIES A RESISTANCE CONTROLEE POUR HAUTES TEMPERATURES, DURCISSABLES DANS DES CONDITIONS AMBIANTES

(30) Priority: 03.07.1997 US 888002; 14.10.1997 US 61961 P
(43) Date of publication of application: 13.06.2007
(62) Divisional of application: 98935513.6
(73) Proprietor: Henkel Loctite Corporation, Rocky Hill, CT 06067 (US)
(72) Inventor: ATTARWALA, Shabbir, West Hartford, CT CT 06117 (US); MAZZELLA, Gina, Durham, NC NC 27713 (US); CHU, H. K., Wethersfield, CT CT 06109 (US); LUONG, Dzu, West Hartford, CT CT 06110 (US); BENNINGTON, Lester, East Hartford, CT CT 06118 (US); KONARSKI, Mark, Old Saybrook, CT CT 06475 (US); MAANDI, Eerik, Rocky Hill, CT CT 06067 (US); RICH, Richard, Whitman, MA 02382 (US); LI, Natalie, Manchester, CT CT 06040 (US); NEWBERTH, Frederick, West Hartford, CT 06127 (US); LEVANDOSKI, Susan, Bristol, CT CT 06010 (US)
(74) Representative: Marchant, James Ian

(56) References cited:
- EP-A1- 0 522 790
- EP-A1- 0 538 866
- EP-A2- 0 250 090
- EP-A2- 0 618 244
- WO-A-99/01484
- WO-A-03/078537
- CA-A1- 2 137 759
- FR-A- 1 404 000
- FR-A- 2 658 831
- US-A- 5 041 508
- US-A1- 3 218 305
- US-A1- 4 180 640
- US-A1- 4 287 330
- US-A1- 4 321 349
- BACCEI L.J. MALOFSKY B.M.: "Adhesive Chemicals" 1984, PLENUM PUBLISHING , XP002183191 * page 589 - page 601 *

## Description

### BACKGROUND OF THE INVENTION

### Field of the Invention

The present invention provides anaerobic adhesive compositions, reaction products of which demonstrate controlled-strength at ambient temperature conditions and enhanced resistance to thermal degradation at elevated temperature conditions. The compositions are (meth)acrylate- and polyorganosiloxane-based and may include one or more other components.

### Brief Description of the Technology

Anaerobic adhesive compositions generally are well-known. See e.g., R.D. Rich, "Anaerobic Adhesives" in Handbook of Adhesive Technology, 29, 467-79, A. Pizzi and K.L. Mittal, eds., Marcel Dekker. Inc., New York (1994) and references cited therein. Their uses are legion and new applications continue to be developed.

Anaerobic adhesive compositions may be classified as ones having high strength, medium strength or low strength. Controlling the strength of anaerobic adhesive compositions to render them having medium or low strength has ordinarily been achieved through the inclusion of a plasticizer or non-reactive diluent component into a high strength anaerobic adhesive composition, with the amount of such component influencing the degree of strength of the cured composition. While apparently satisfactory to provide an anaerobic adhesive composition with the properties desired, such an approach typically provides only a temporary solution to an immediate need and does little to advance the knowledge base of controlling the strength of anaerobic adhesive compositions.

Moreover, the inclusion of a non-reactive diluent in a high strength anaerobic adhesive composition by trapping the diluent in the polymeric matrix which forms upon curing, effectively limits the cross-link density which can form in the cured composition. This reduces the overall strength of the cured compositions.

More specifically, in use at ambient temperature conditions, the cured composition retains the non-reactive diluent. However, as the temperature of the environment in which the cured composition increases, the non-reactive diluent either evaporates or otherwise escapes from the polymeric matrix due to its decreased viscosity in view of the increased temperature. In either event, at increased temperatures (e.g., about 250°F and greater) the so-formed polymeric matrix becomes little more than a shell resulting in virtually no strength retention.

The patent literature points out examples of related anaerobic adhesives:
U.S. Patent Nos. 4,107,109 (Kassal) (composition for making graft copolymers under anaerobic conditions at elevated temperatures, including a solution of certain uncured elastomers in a polymerizable vinyl monomer and a thermally activatable modified peroxide initiator, which form a continuous phase with the resulting vinyl polymer forming a separate and discrete phase); 4,216,134 (Brenner) (one-component anaerobic adhesive compositions which include ethylenically unsaturated diluent monomers, prepolymers and triallyl cyanurate or triallyl isocyanurate as reaction components); 4,269,953 (Brand) (certain biphenylene additives as reactive plasticizers which are said to render easier working, molding, extruding and the like, of the polymer and react to cross link certain aromatic thermoplastic polymers); 4,302,570 (Werber) (the purported use of reactive non-terminal hydroxydiesters of unsaturated organic dicarboxylic acids or anhydrides as plasticizers for anaerobic adhesives); 4,384,101 (Kovacs) (thermosetting resin mixtures which contain epoxide components, isocyanate components, latent-hardening components and triallyl cyanurate as a cross-linking compound); 4,431,787 (Werber) (polymerizable acrylic monomers, depicted with internal chain unsaturation as well as acrylic unsaturation, which cross-polymerize through the sites of internal chain unsaturation to furnish the reaction product); 4,524,176 (Pike) (anaerobic adhesive which includes the reaction product of an hydroxyl-containing polyester and a glycidyl acrylate) and the addition of a modifier -- i.e., triallyl cyanurate -- to alter flexibility and bond strength of the cured adhesive); 4,600,738 (Lamm) and 4,624,725 (Lamm) (two-component acrylic modified polyester adhesives of (a) the acrylic modified polyester reaction product of a glycidyl acrylate and a hydroxyl containing polyester and (b) an organometallic acid salt containing a polymerizable monomer).

Also of interest are:
U.S. Patent Nos. 5,567,741 (Casey) (in the context of foaming applications, acrylate anaerobic compositions, certain of which include ethylene glycol); 3,794,610 (Bachmann) (plasticized anaerobic compositions including a polymerizable acrylate ester monomer (a non-silicone based acrylate monomer), a peroxy polymerization initiator and a polymeric plasticizer); 4,267,330 (Rich) (certain diaza accelerators for curable adhesive and sealant compositions); 3,988,299 (Malofsky) (heat curable composition having improved thermal properties, which includes certain acrylate monomers and maleimide compounds); and 5,302,679 (Maandi) (anaerobic compositions which expand when post cured).

In addition, L.J. Baccei and B.M: Malofsky, "Anaerobic Adhesives Containing Maleimides Having Improved Thermal Resistance" in Adhesive Chemicals, 589-601, L-H, Lee, ed., Plenum Publishing Corp. (1984) reports the use of maleimides -- specifically, N-phenyl maleimide, m-phenylene dimaleimide and a reaction product of methylene dianiline and methylene dianiline bismaleimide -- to increase the thermal resistance of anaerobic adhesives which are fully cured at temperatures of at least 150°C.

And, F.J. Campbell, "Electron Beam Curing Improves High Temperature Strength of Vinyl Ester Adhesives", Nat'l SAMPE Symp. Exh., 59-63 (1.977) speaks to radiation curing of acrylic-modified epoxies together in formulations with vinyl functional monomers (i.e., divinyl benzene, trialkyl cyanurate and styrene) to form cured resins of higher level cross-linking and superior ambient and elevated temperature performance.

Silicones (or polyorganosiloxanes), because of their excellent thermal stability, have been used for many sealant, adhesive and coating applications. However, because of large amounts of dissolved oxygen and high permeability to oxygen, conventional wisdom generally believed until recently that silicones would not be anaerobically curable.

For instance, U.S. Patent No. 4,035,355 (Baney) teaches anaerobically curing sealant compositions of acrylate-containing polyorganosiloxanes and a hydroperoxy polymerization initiator. These compositions require relatively long cure times -- i.e., about 24 hours -- and therefore would have limited commercial acceptance.

U.S. Patent No. 5,391,593 (Inoue) is directed to a silicone rubber sealant composition of an organopolysiloxane, organic peroxide and carbon black which is said to cure under anaerobic conditions into silicone rubber having improved physical properties. These silicones require about 2 to 3 days after removal of oxygen to fully cure. Such a cure profile again would meet with poor commercial acceptance.

Japanese Patent Document JP 04-268,315 appears to be directed to an anaerobically and ultraviolet curable polyorganosiloxane composition for adhesive purposes that is reported to have good heat resistance.

Recently, Loctite Corporation made an advance in the field of anaerobically-curable silicone formulations by teaching an anaerobic composition including (a) a silicone fluid formed as the reaction product of a first silane having at least one hydrolyzable functional group, and a second silane having a (meth)acrylic functional group and at least one hydrolyzable functional group; (b) a (meth)acrylate monomer; and (c) polymerization initiator. See U.S. Patent No. 5,605,999 (Chu). These anaerobically-curable silicone formulations are referred to herein as "SiMA".

While appealing for many commercial applications, certain other commercial applications requiring enhanced resistance to thermal degradation at elevated temperature conditions -- such as, machinery operations or operations which ordinarily occur at elevated temperature conditions, for instance, oil field applications or applications in electric motors --, may be better served by a composition demonstrating a resistance and degradation profile more precisely tailored to that application.

Accordingly, it would be desirable to provide an anaerobically curing silicone composition, which cures in a short period of time without sacrificing heat stability and strength properties of the cured resin, and which demonstrates enhanced resistance to thermal degradation at elevated temperature conditions. It would further be desirable to be able to control the strength of the cured resin while maintaining high temperature resistance.

Notwithstanding the state-of-the-technology,' a one-part, anaerobic adhesive composition would be desirable which is capable of curing under ambient environmental conditions, and which, when cured into reaction products, demonstrates superior properties, such as controlled strength and superior resistance to thermal degradation at elevated temperatures.

### SUMMARY OF THE INVENTION

The present invention meets the desires discussed above by providing methods of controlling the strength of high temperature resistant anaerobic adhesives through the use of certain additives. That is, the present invention provides anaerobic adhesive compositions, reaction products of which demonstrate controlled strength at ambient temperature conditions and enhanced resistance to thermal degradation at elevated temperature conditions.

The present invention provides an anaerobically curable composition comprising: (a) a SiMA; (b) a (meth)acrylate component; (c) an anaerobic cure-inducing component; and (d) a further component (d) which may be(d₁) a maleimide component. Such compositions may also include as component (d) alternatively, or in addition, to the maleimide component, (d₂) a mono- or poly-hydroxyalkane component or (d₃) a plasticizer component.

According to one aspect of the invention, the compositions include: (a) SiMA; (b) a (meth)acrylate component; (c) an anaerobic cure-inducing composition; and (d₂) a mono- or poly-hydroxyalkane component.

In another aspect of the invention, the compositions include: (a) a SiMA; (b) a (meth)acrylate component; (c) an anaerobic cure-inducing component and (d₃) a polymeric plasticizer component.

Such compositions may also include, (d₂) a mono- or poly-hydroxyalkane component, and/or a chelator.

The invention also provides a process for preparing reaction products from the anaerobic adhesive compositions of the various aspects of the present invention, the steps of which include applying the composition to a desired substrate surface and exposing the coated substrate surface to conditions which are appropriate to effect cure thereof -- e.g., exposure to conditions in which air is substantially excluded therefrom.

Also, the invention of course provides the reaction products so-formed by the above-described process, which reaction products demonstrate superior thermal properties such as resistance to degradation at elevated temperatures.

The present invention will be more fully appreciated by a reading of the detailed description and the illustrative examples which follow thereafter.

### DETAILED DESCRIPTION OF THE INVENTION

As noted above, the present invention is directed to anaerobic adhesive compositions which are based on a (meth)acrylate component and/or SiMA component, together with an anaerobic cure-inducing composition.

The (meth)acrylate monomer suitable for use in the present invention may be chosen from a wide variety of materials represented by H₂C=CGCO₂R¹, where G may be hydrogen, halogen or alkyl of 1 to about 4 carbon atoms, and R¹ may be selected from alkyl, cycloalkyl, alkenyl, cycloalkenyl, alkaryl, aralkyl or aryl groups of 1 to about 16 carbon atoms, any of which may be optionally substituted or interrupted as the case may be with silane, silicon, oxygen, halogen, carbonyl, hydroxyl, ester, carboxylic acid, urea, urethane, carbamate, amine, amide, sulfur, sulfonate, sulfone and the like.

(Meth)acrylate monomers suitable for use herein include polyethylene glycol di(meth)acrylates, tetrahydrofuran (meth)acrylates and di(meth)acrylates, hydroxypropyl (meth)acrylate ("HPMA"), hexanediol di(meth)acrylate, trimethylol propane tri(meth)acrylate, diethylene glycol di(meth)acrylate, triethylene glycol di(meth)acrylate ("TRIEGMA"), tetraethylene glycol di(meth)acrylate, dipropylene glycol di(meth)acrylate, di-(pentamethylene glycol) di(meth)acrylate, tetraethylene diglycol di(meth)acrylate, diglycerol tetra(meth)acrylate, tetramethylene di(meth)acrylate, ethylene dimethacrylate, neopentyl glycol diacrylate, trimethylol propane triacrylate and bisphenol-A di(meth)acrylates, such as ethoxylated bisphenol-A (meth)acrylate ("EPIBMA").

More specific (meth)acrylate monomers particularly desirable for use herein include polyethylene glycol di(meth)acrylates, bisphenol-A di(meth)acrylates, such as EBIPMA and tetrahydrofuran (meth)acrylates and di(meth)acrylates, hydroxypropyl (meth)acrylate, hexanediol di(meth)acrylate, trimethylol propane tri(meth)acrylate, a (meth)acrylate ester corresponding to the structure as shown below: 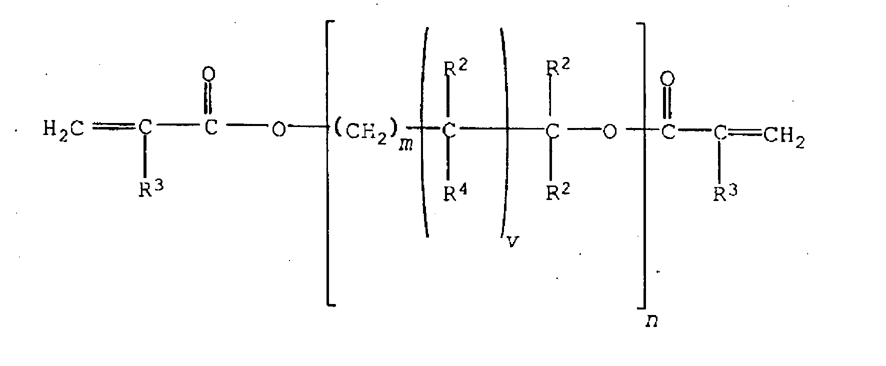 where R² may be selected from hydrogen, alkyl of 1 to about 4 carbon atoms, hydroxyalkyl of 1 to about 4 carbon atoms or 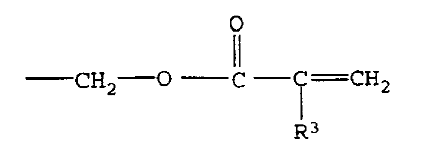 R³ may be selected from hydrogen, halogen, and alkyl of 1 to about 4 carbon atoms;
R⁴ may be selected from hydrogen, hydroxy and 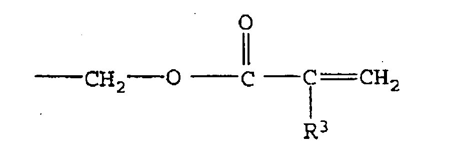 m is an integer equal to at least 1, e.g., from 1 to about 8 or higher, for instance, from 1 to about 4;
n is an integer equal to at least 1, e.g., 1 to about 20 or more; and
v is 0 or 1.
Of course, combinations of these (meth)acrylate monomers may also be used.

When used, the (meth)acrylate monomer should be present in the compositions within the range of from about 1 percent by weight to about 60 percent by weight, desirably from about 5 percent by weight to about 50 percent by weight, such as from about 10 percent by weight to about 40 percent by weight, based on the total composition.

SiMA, such as taught by and claimed in U.S. Patent No. 5,605,999 (Chu), the disclosure of which is hereby expressly incorporated herein by reference, may be used instead of or in addition to the (meth)acrylate monomer as the anaerobically curing resin. That is, such silicone fluids may be formed as reaction products of (a) a silane material within the formula RₙSi(X)₄₋ₙ, where R is H, C₁₋₁₂ alkyl, C₆₋₁₂ aryl, C₇₋₁₈ arylalkyl, C₇₋₁₆ alkylaryl and derivatives thereof, and monovalent ethylenically unsaturated radicals, X is a hydrolyzable functionality and n is an integer from 0 to 3, and (b) a silane material within the formula R'ₘRₚSi(X)_{4-(m+p),} where R' is a (meth)acrylic functional group, R and X are as above, and m is an integer from 1 to 3 and m+p is an integer from 1 to 3. Certain of these moieties ordinarily may be reaction products of halogenated trialkyl silanes, tetraalkoxysilanes and (meth)acrylic-subtituted trialkoxysilanes.

In the reaction forming SiMA, the first silane should be used in an amount with the range of from about 1 to about 99 mole%, desirably from about 30 to about 90 mole%, such as from about 50 to about 85 mole% of the combination of the first and second silanes. The second silane should be used in an amount with the range of from about 1 to about 99 mole%, desirably from about 15 to about 70 mole%, such as from about 20 to about 50 mole% of the combination of the first and the second silanes. Often, third and fourth silanes are used to prepare SiMA.

In the compositions of the present invention, the hydrolyzable functionality in either or both of the first silane or the second silane may be any functionality which, when attached to a silicon atom through a Si-O, Si-halo, Si-N or Si-S bond, is readily hydrolyzable in the presence of water. Examples of such functionalities include, but are not limited to, halogen, (meth)acryloxy, alkoxy, aryloxy, isocyanato, amino, acetoxy, oximinoxy, aminoxy, amidato and alkenyloxy.

In the compositions of the present invention, R may be chosen from C₁-C₁₂ alkyl and C₆-C₁₂ aryl. In such instances when R is C₁-C₁₂ alkyl or C₆-C₁₂ aryl, examples of the first silane include, but are not limited to, dimethylchlorosilane, phenyltrichlorosilane, tetrachlorosilane, trimethylchlorosilane, trimethylmethoxysilane, dimethyldimethoxysilane, phenyltrimethoxysilane and tetraethoxysilane.

When R² on the second silane is chosen from C₁-C₁₂ alkyl, C₆-C₁₂ aryl, alkenyl, (meth)acryloxy and vinyl, the second silane itself may be (meth)acryloxypropyl trimethoxysilane, (meth)acryloxypropyl trichlorosilane, (meth)acryloxypropyl dimethylchloro silane, (meth)acryloxymethyl dichlorosilane and (meth)acryloxymethyldimethyl acryloxysilane.

The second silane component may ordinarily be obtained commercially or prepared by methods well-known in field of methacrylate-functionalized silanes. Examples of such methods may be found in U.S. Patent Nos. 2,793,223 (Merker); 2,898,361 (Barnes, Jr.); 2,922,806 (Merker); 2,922,807 (Merker); 4,348,454 (Bckberg); 4,665,147 (Lien); 5,179,134 (Chu); 5,182,315 (Chu); and 5,212,211 (Welch, II), the disclosures of each of which are hereby expressly incorporated herein by reference.

Of course, appropriate combinations of first silanes may be used as the first silane component; likewise appropriate combinations of second silanes may be used as the second silane component.

The SiMA (a) should be present in the composition in an amount within the range of from about 40 to about 95 percent by weight of the composition, and desirably from about 50 to about 90 percent by weight of the composition, such as from about 60 to about 85 percent by weight of the composition.

The anaerobic cure-inducing composition useful in the present invention includes a variety of components, such as amines (including amine oxides, sulfonamides and triazines). A desirable composition to induce cure in accordance with the present invention includes saccharin, toluidines, such as N,N-diethyl-p-toluidine and N,N-dimethyl-o-toluidine, acetyl phenylhydrazine, and maleic acid. Of course, other materials known to induce anaerobic cure may also be included or substituted therefor. See e.g., Loctite U.S. Patent Nos. 3,218,305 (Krieble), 4,180,640 (Melody), 4,287,330 (Rich) and 4,321,349 (Rich). Quinones, such as napthoquinone and anthraquinone, may also be included to scavenge free radicals which form.

In one aspect of the invention, the compositions may include a maleimide component.

Many maleimide compounds are suitable for use herein as the maleimide component.

The maleimide component may include any maleimide which remains substantially unreacted at ambient temperature, but becomes reactive at increased temperatures approaching about 163°C (325°F) and greater. Accordingly, many maleimide compounds are suitable for use herein as the maleimide component.

Generally, maleimides which are useful herein conform to the following structures: 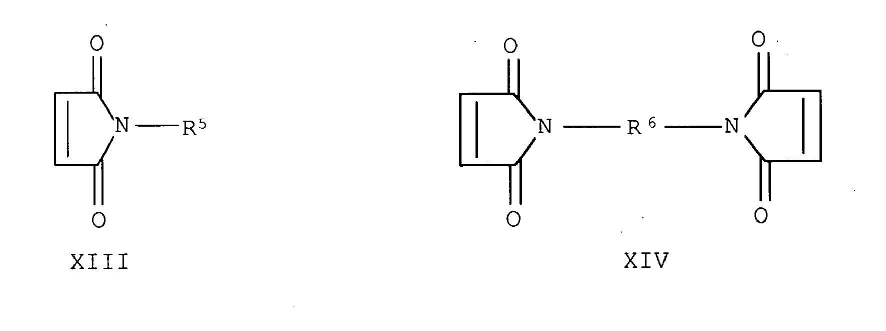 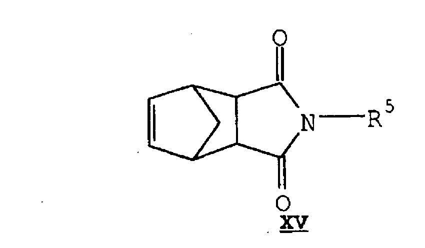 and 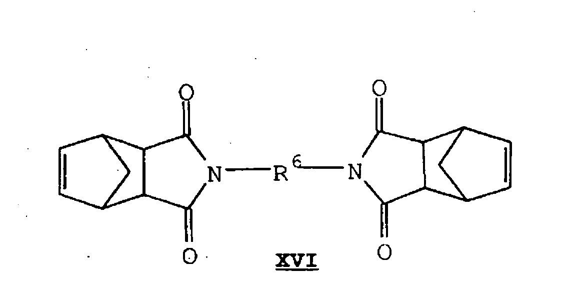 where R⁵ and R⁶ are selected from alkyl, aryl [such as phenyl (mono and polyphenyl) and derivatives thereof, such as nitro, hydroxyl, alkyl and the like], cycloalkyl, aralkyl and alkaryl groups, which should ordinarily contain from about 6 to about 100 carbon atoms, with about 6 to about 50 carbon atoms being desirable, any of which may be optionally substituted or interrupted as the case may be with silane, silicone, oxygen, halogen, carbonyl, hydroxyl, ester, carboxylic acid, urea, urethane, carbamate, sulfur, sulfonate, sulfone and the like. For instance, R⁶ may represent groups such as 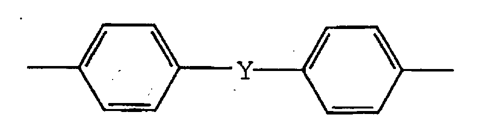 where the phenyl groups are substituted at one or more positions with linear, branched or cyclic alkyl, alkenyl, alkynyl, alkoxy, or aryl groups having from 1 to about 20 carbon atoms, with or without substitution by halogen, hydroxy, nitrile, ester, amide or sulfate; and Y may represent O, S, carbonyl, sulfone, or primary or secondary methylene groups substituted with linear, branched or cyclic alkyl, alkenyl, alkynyl, alkoxy, or aryl groups having from 1 to about 20 carbon atoms, with or without substitution by halogen, hydroxy, nitrile, ester, amide or sulfate.

Desirable maleimides include compounds within structures XIII and XIV shown below as structures XVII [N-phenyl maleimide ("NPM")], XX [N,N'-m-phenylene bismaleimide ("HVA-2", commercially available from E.I. DuPont Chemical Co., Wilmington, Delaware)], XIX [N,N'-(4,4'-methylene diphenylene)bismaleimide ("BMI-30")], XX [N,N'-(2,2'-diethyl-6,6'-dimethyl-4,4'-methylene diphenylene) bismaleimide ("BMI-70" or "MB-7000", commercially available under the "THERMAX" tradename from Mitsubishi Petrochemical Co., K-I Chemical Industry Co., Ltd., Tokyo, Japan)], XXI
[2,2'-bis[4-(4'-maleimidediphenoxy)pheny] propane ("MB-8000", commercially available under the "THERMAX" tradename from Mitsubishi), and XXII [multi-functional maleimide prepared as a condensate of aniline, o-toluidine and terephthaldehyde with maleic anhydride, ("MP-2000X"), commercially available under the "THERMAX" tradename from Mitsubishi] : 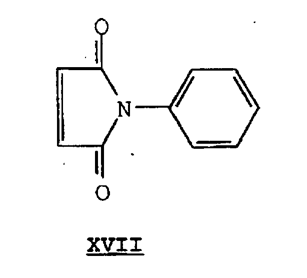 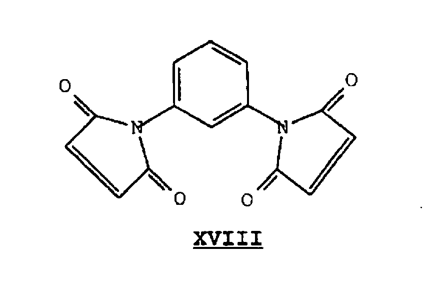 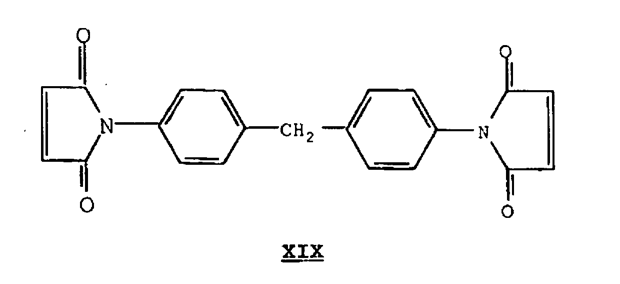 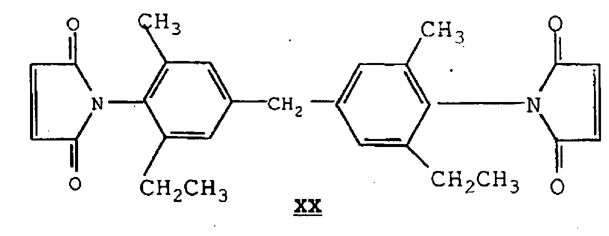 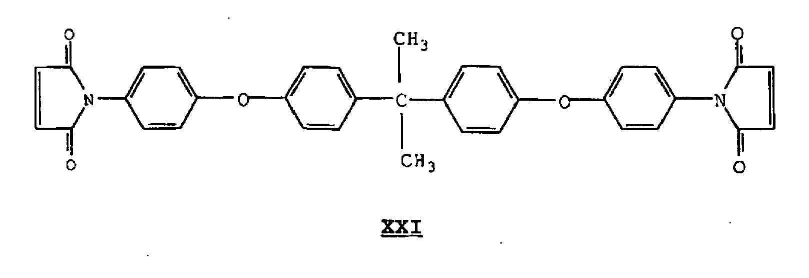 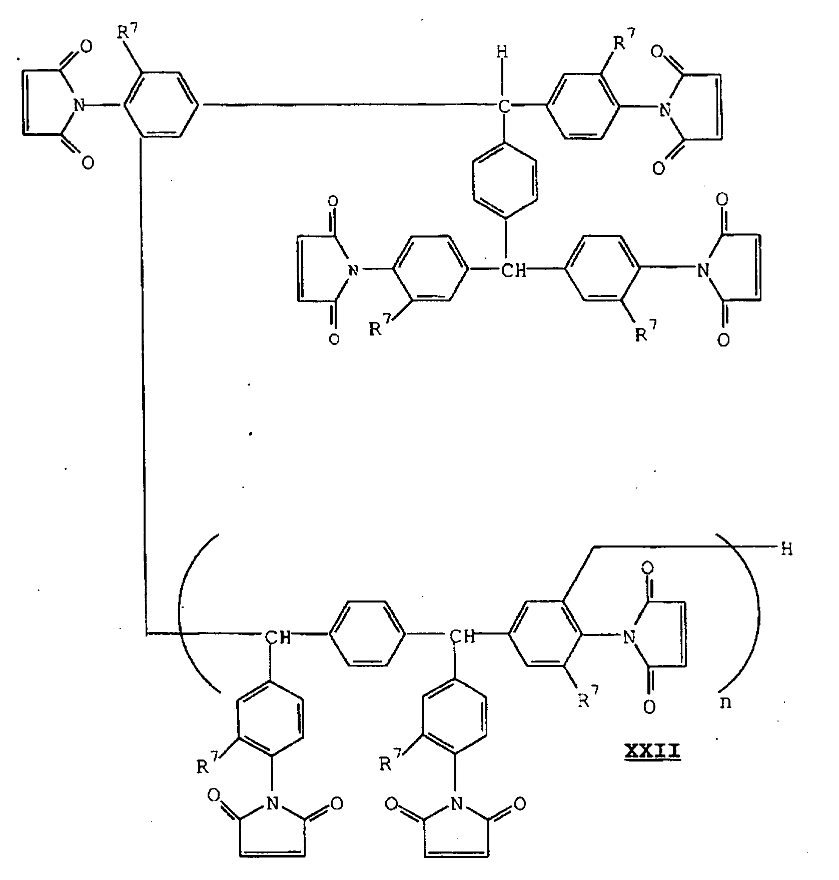 where R⁷ may be selected from H or alkyl (such as CH₃), and n is an integer within the range of 1 to about 10.

The maleimide component should be present in the composition in an amount within the range of from about 5% to about 20%, based on the total weight of the composition.

The compositions may also include a diluent component reactive at elevated temperature conditions.

Reactive diluents include those materials which are particularly (1) unreactive at ambient temperature conditions and (2) reactive at elevated temperature conditions. In addition, such diluents should be capable of not only reacting with other components of the inventive adhesive compositions, but also with reactive moities on itself. This feature allows the diluent to self-polymerize as well as polymerize with reactive moities on the other components of the composition. As such, the reactive diluent becomes incorporated into the polymeric matrix which forms at ambient temperature and which further forms at increased temperatures. The incorporation of the reactive diluent provides at least in part for the high temperature performance demonstrated by the cured composition.

More specific examples of such reactive diluents include alkenyl- or alkynyl-terminated silicone fluids, such as vinyl- or allyl-terminated silicone fluids, an example of which is vinyl-terminated polydimethyl siloxane.

Other examples of reactive diluents based on silicone fluids include alkenyl- or alkynyl-terminated MQ resins. MQ resins are a family of silicone-based materials with a structure represented generally by (R₃SiO_{1/2})ₓ(SiO_{4/2})_{y}. Ordinarily, the ratio of x to y is in the range of about 0.5 to about 1.0 and R is alkyl, such as methyl; however, a portion of the total R content may also include hydrogen, other alkyl, alkenyl, alkynyl, aryl or derivatives thereof. Where a portion of a the total R content includes vinyl, functionality in the form of vinyl-dimethyl-SiO_{1/2}, vinyl-methyl-SiO_{2/2} and/or vinyl-SiO_{3/2} may be present, and the resulting resin is termed by the art skilled as a vinyl-MQ resin.

Vinyl-MQ resins may ordinarily be prepared by (1) acidifying water-soluble sodium silicate, and thereafter capping the resulting sol with a trimethylsilyl group as well as with vinyl-containing silane or (2) co-hydrolyzing and/or co-condensing silanes containing trimethylsilane groups, vinyl silane groups and tetraoxysilane. For a further discussion of commercial silicone resins of this type, see R.H. Blaney et al., "Sisesquioxanes", Chem. Rev., 95, 1409-30 (1995).

Still other examples of the reactive diluent include alkenyl-terminated cyclosiloxanes, such as vinyl- or allyl-terminated cyclosiloxanes, desirably 2,4,6-trimethyl-2,4,6-trivinyl-cyclotrisiloxane ("vinyl-D3") or 2,4,6,8-tetramethyl-2,4,6,8-tetravinyl-cyclotetrasiloxane ("vinyl-D4"). In addition, alkynyl-terminated cyclosiloxanes may also be used herein.

And of course appropriate combinations of such reactive diluents may be used.

When used, the reactive diluent should be employed in an amount within the range of about 1 to about 50 percent by weight, based on the total weight of the composition.

The compositions may also include a mono- or poly-hydroxyalkane component.

The mono- or poly-hydroxyalkanes include alkylene glycols, like ethylene glycol, propylene glycols and propane triols, butane glycols and butane triols, butane tetraols, butylene pentaols and the like, pentylene glycols and pentane triols, pentane tetraols, pentane pentaols, pentane hexaols and the like, hexylene glycols and hexane trios, hexane tetraols, hexane tetraols, hexane pentaols, hexane hexaols, hexane heptaols and the like, and combinations thereof, may be used, as noted above. Such hydroxyalkanes tend to increase the cure speed, improve the shelf-life stability and improve the surface insensitivity (i.e., improve the bonding strength on oiled and/or slow curing substrates, such as zinc substrates) of anaerobic formulations in which they are placed, and decrease the break strength of reaction products of such formulations without compromising the prevailing torque thereof.

When used, the mono- or poly-hydroxyalkanes should be employed in an amount within the range of from about 0.01 to about 10 percent by weight, based on the total weight of the composition.

In certain other compositions of this invention, a polymeric plasticizer component may also be in included. The polymeric plasticizer should aid in bond formation and bond strength on insensitive, unreactive and slow-to-cure metal substrate surfaces, such as zinc and re-oiled surfaces.

The plasticizer component may be chosen from a wide variety of plasticizers depending on the desired properties of the composition and/or reaction product thereof. See e.g., U.S. Patent No. 3,794,610 (Bachmann), the disclosure of which is hereby expressly incorporated herein by reference.

A particularly desirable plasticizer for use herein is a polymeric plasticizer, such as one available commercially under the tradename "UNIFLEX" 300 from Unicamp Corporation, Jacksonville, Florida. "UNIFLEX" 300 is a medium molecular weight polymeric plasticizer (made from hexanedioic acid and polymer with 1,4-butane diol and 1,2-propane diol), which is liquid at 25°C whose viscosity at that temperature is 3300 cps. This polymeric plasticizer is reported to be resistant to high temperatures.

When the compositions are to be applied on zinc, stainless steel or re-oiled substrates, a poly(ethylene glycol) monooleate, such as poly(ethylene glycol) 200 monooleate, may be used in this regard as well.

When used in the inventive compositions, a high strength formulation results which is particularly well-suited for use as a sealant.

When present, such plasticizers may ordinarily be used in the compositions in an amount within the range of from about 1 to about 20 percent by weight, such as about 1 to about 6 percent by weight, based on the total weight of the composition.

A chelator is ordinarily included in an amount sufficient to control shelf-life stability of the composition.

Appropriate chelators may be chosen from a variety of materials, such as ehtylenediamine tetraacetic acid ("EDTA") and diethylene triamine pentaacetic acid pentasodium salt ("DTPA").

Chelators are ordinarily used in the compositions in an amount from about 0.001 percent by weight to about 0.06 percent by weight, based on the total weight of the composition.

The inventive compositions may also include other components, such as free radical initiators, free radical accelerators, inhibitors of free radical generation, as well as metal catalysts.

A number of well-known initiators of free radical polymerization may be incorporated into compositions of the present invention including, without limitation, hydroperoxides, such as cumene hydroperoxide ("CHP"), para-menthane hydroperoxide, t-butyl hydroperoxide ("TBH") and t-butyl perbenzoate.

Such peroxide compounds may be employed in the present invention in the range of from about 0.1 to about 10 percent by weight of the total composition, with about 0.5 to about 5 percent by weight being desirable.

Stabilizers and inhibitors (such as phenols including hydroquinone and quinones) may also be employed to control and prevent premature peroxide decomposition and polymerization of the composition of the present invention.

Accelerators may be employed to enhance the rate of cure propagation, such as in amounts in the range of about 0.1 to about 5, such as about 1 to about 3, percent by weight of the total composition. When the accelerator is in the form of a metal catalyst solution or a pre-mix, it may be used in an amount in the range of about 0.03 to about 0.1% by weight of the total composition. Other agents such as thickeners, plasticizers, fillers, and other well-known additives may be incorporated in the inventive composition where the art-skilled person believes it would be desirable to do so.

The compositions of the present invention may be prepared using conventional methods which are well known to those persons of skill in the art. For instance, the components of the inventive compositions may be mixed together in any convenient order consistent with the roles and functions the components are to perform in the compositions. Conventional mixing techniques using known apparatus may be employed.

The compositions of this invention may be applied to a variety of substrates to perform with the desired benefits and advantages described herein. For instance, appropriate substrates may be constructed from steel, brass, aluminum, zinc and other metals and alloys, ceramics and thermosets.

The compositions of this invention may also be used to impregnate the pores of substrates constructed from such materials.

Such uses of anaerobic compositions generally as impregnant sealants is well-known. Indeed, Loctite Corporation has for many years sold impregnant sealants under the trademark "RESINOL", such as "RESINOL RTC" and "RESINOL 90C".

The inventive compositions, when used as impregnant sealants, may be formulated to have high temperature resistance when cured or low viscosity so as to be curable more quickly and to have enhanced shelf-life stability over existing commercial impregnant sealants.

For those impregnant sealants to be used in high temperature applications, a coreactant (such as TAC or TAI) should be present in an amount within the range of about 20 to about 30 weight percent.

For those lower viscosity impregnant sealants formulated for faster cure speed and enhanced shelf-life stability, a mono- or poly-hydroxyalkane component should be present in an amount within the range of about 1 to about 10 weight percent.

In addition to imparting lower viscosity, faster cure speeds and enhanced sealant formulations, the use of mono- or poly-hydroyalkanes as a component of impregnant sealants aids in the aqueous wash out of uncured compositions from the porous part to be sealed.

The compositions of this invention cure as their name connotes under anaerobic conditions. Nevertheless, other cure modalities may also be employed, if desired, provided of course appropriate choices are made for the components of the inventive compositions to render them curable under the desired conditions. For instance, see the '305, '640, '330 and '349 patents.

As with other anaerobic adhesives, the compositions of the present invention are capable of curing in the substantial absence of air. However, unlike some anaerobic adhesive compositions, the compositions of this invention are capable of curing to form a reaction product at ambient environmental conditions, i.e., at room temperature, instead of requiring elevated temperatures. The requirement of elevated temperatures for curing such adhesives increases manufacturing costs due at least in part to increased energy consumption. The so-formed reaction product forms an acceptable bond without requiring a second part primer material, such as is described in the '738 and '725 patents supra. Thus, the inventive compositions are one-part compositions. And the requirement of a second part primer to form an acceptable bond adhesive increases manufacturing costs due at least in part to the required additional material and is also disadvantageous at least in part with respect to lacking the convenience of a one part system.

The invention also provides a process for preparing a reaction product from the anaerobic adhesive composition of the present invention, the steps of which include applying the composition to a desired substrate surface and excluding air from the environment in which the substrate is positiond.

In another aspect of this invention, there is provided a method of producing anaerobically curing SiMA-containing compositions.

The following method represents a method for the preparation of SiMa. The method of preparing SiMA includes the step of allowing at least one first silane to react with at least one second silane in the presence an effective amount of water to hydrolyze hydrolyzable groups on the first and second silanes, thereby producing a silicone fluid. The first silane is within the formula, RₙSi(X)_{4-n,} where the R groups may the same or different and selected from hydrogen, C₁-C₁₂ alkyl, C₆-C₁₂ aryl, C₇-C₁₈ arylalkyl, C₇-C₁₈ alkylaryl and monovalent ethylenically unsaturated radicals excluding (meth)acryloxy functional groups, X is a hydrolyzable functionality, and n is an integer of from 0 to 3. The second silane is within the formula, R¹ₙR²ₘSi(X)₄₋₍ₘ₊ₙ₎, where R¹ is a (meth) acryloxy functional group and R² is selected from monovalent ethylenically unsaturated radicals, hydrogen, C₁-C₁₂ alkyl, C₆-C₁₂ aryl, C₇-C₁₈ arylalkyl, and C₇-C₁₈ alkylaryl, X is a hydrolyzable functionality, m is an integer from 1 to 3, and m+p is an integer from 1 to 3.

At ambient temperature and in the presence of oxygen, additional components are next added. For instance, the (meth)acrylate component, maleimide component and an anaerobic cure-inducing component (and if desired any of the other components noted above) are thereafter added to SiMA, thereby producing an anaerobically curable composition in accordance with this invention, which when cured demonstrates high strength and resistance to thermal degradation at elevated temperatures.

The composition may be positioned onto, and in contact with, the surfaces by any suitable means such as spreading or dipping and the surfaces then brought into close proximity. Any solvent which may be present should be allowed to evaporate before the surfaces are brought into close proximity. Alternately, when the composition shows sufficient fluidity, the surfaces can be brought into close proximity and the composition subsequently positioned, e.g., by capillary action, into the small volume between, and in contact with, the surface. The composition however positioned and enclosed by the surface, being effectively excluded from oxygen, cures to an insoluble solid and adheres to the surface, thereby providing an assembly with two or more surfaces held in a fixed relative configuration.

In view of the above description of the present invention, it is clear that a wide range of practical opportunities is provided.

The following examples are provided to further illustrate the present invention. Many other practical opportunities exist with respect to the teaching herein, which will become readily apparent to those persons of skill in the art upon a review of the examples.

### EXAMPLES

### I. Formulation of Controlled Strength Anaerobic Adhesive Compositions

Sixteen (meth)acrylate-based formulations were prepared, where the (meth)acrylate component included various combinations of SiMA, HPMA and EBIPMA. More specifically, Sample Nos. 1-8 included about 15% by weight of HVA-2 as such a maleimide component. Whereas Sample Nos. 1-4 were formulated with vinyl-terminated polydimethylsiloxane as a reactive diluent component, Sample Nos. 5-8 were formulated with poly(ethylene glycol) (200) monooleate as a non-reactive diluent component. Whether the diluent component was of the reactive-type in accordance with this invention or of the non-reactive type, amounts of 5, 10, 20 or 30% by weight were chosen for formulation purposes.

For each of the samples, about 4.78% by weight of an anaerobic cure-inducing composition, which included about 1.22% by weight of saccharin, about 0.28% by weight of acetyl phenylhydrazine, about 0.2% by weight of N,N-diethyl-p-toluidine, about 0.122% by weight of N,N-dimethyl-o-toluidine, about 0.32% by weight of maleic acid, and about 2.26% by weight of cumene hydroperoxide was included.

Initially, the compositions were prepared by adding with mechanical mixing at room temperature the appropriate amounts of the (meth)acrylate component, maleimide component, if any, and diluent component in any order to 50 ml beakers, and thereafter adding the appropriate amounts of the components of the desired anaerobic cure-inducing composition (save cumene hydroperoxide).

The components were mixed for an appropriate period of time to allow for dissolution and/or dispersion, as the case may be, of the solid components. An appropriate amount of cumene hydroperoxide was then added portionwise, with mixing continued for an additional period of time of about 0.5 hours.

The so-formed formulations were stored for further use by covering the beaker ensuring that an air pocket remained between the surface of the formulation and the cover.

The components and amounts thereof used in by weight percentages in each of the sixteen formulations are presented in below Table 1.

**Table 1**

| Sample No. | Acrylate Component | | Maleimide component | Diluent component | |
|---|---|---|---|---|---|
| | total | individual | | React. | Non-react. |
| 1 | 66.38 | SiMA (52.68) HPMA (9.56) EPIBMA (4.14) | HVA-2 (15.02) | PDMS (5) | -- |
| 2 | 61.38 | SiMA (48.70) HPMA (8.84) EPIBMA (3.84) | HVA-2 (15.02) | PDMS (10) | -- |
| 3 | 51.38 | SiMA (40.78) HPMA (7.40) EPIBMA (3.22) | HVA-2 (15.02) | PDMS (20) | -- |
| 4 | 41.58 | SiMA (32.84) HPMA (5.96) EPIBMA (2.58) | HVA-2 (15.02) | PDMS (30) | -- |
| 5 | 66.38 | SiMA (52.68) HPMA (9.56) EPIBMA (4.14) | HVA-2 (15.02) | -- | 5 |
| 6 | 61.38 | SiMA (48.70) HPMA (8.84) EPIBMA (3.84) | HVA-2 (15.02) | -- | 10 |
| 7 | 51.38 | SiMA (40.78) HPMA (7.40) EPIBMA (3.22) | HVA-2 (15.02) | -- | 20 |
| 8 | 41.38 | SiMA (32.84) HPMA (5.96) EPIBMA (2.58) | HVA-2 (15.02) | -- | 30 |

### A. Application, and Ambient Temperature Cure, of Controlled Strength Anaerobic Adhesive Composition

The sample formulations set forth above in Table 1 were applied to five sets of degreased 3/8 x 16 steel fastener assemblies, which were then allowed to cure at room temperature for a period of time of about 24 hours. After the cure time, the fasteners were evaluated for break strength (i.e., torque required to turn the nut on the bolt of the fastener assembly), data for which are shown in below Table 2.

**Table 2**

| Sample No. | | 1 | 2 | 3 | 4 | 5 | 6 | 7 | 8 |
|---|---|---|---|---|---|---|---|---|---|
| Break Strength (in.N.m) | | 25.0 | 22.6 | 16.9 | 12.0 | 29.2 | 23.5 | 14.7 | 8.9 |
| Break Strength (in.lbs) | | 221 | 200 | 150 | 106 | 258 | 208 | 130 | 79 |

These data indicate that all eight formulations function at room temperature like a traditional anaerobic (meth)acrylate-based adhesive.

### B. Hot Strength

Initially, the steel fasteners assembled with Sample Nos. 1-8 were evaluated for their hot strength performance after curing at room temperature and thereafter subjected to elevated temperatures of about 204°C (400°F) and about 260°C (500°F) for a period of time of about 2 hours. The fasteners were evaluated for break strength at that temperature, hot strength data for which are shown below in Table 3.

**Table 3**

| | Hot strength | Sample No. | | | | | | | |
|---|---|---|---|---|---|---|---|---|---|
| | | 1 | 2 | 3 | 4 | 5 | 6 | 7 | 8 |
| 204°C (400°F) | N.m | 29.0 | 28.9 | 22.9 | 14.1 | 28.2 | 26.0 | 16.2 | 9.4 |
| | (in.lbs.) | 257 | 256 | 203 | 125 | 250 | 230 | 143 | 83 |
| 260°C (500°F) | N.m | 24.9 | 25.9 | 19.5 | 13.4 | 21.5 | 18.1 | 9.4 | 6.0 |
| | (in.lbs.) | 220 | 229 | 173 | 119 | 190 | 160 | 83 | 53 |

Hot strength is increased due to presence of the maleimide component in Sample Nos. 1-8. Increasing the concentration of diluent (whether or not reactive), however, decreases the hot strength, which is desirable in the context of this invention; however, those samples containing reactive diluent and maleimide (Nos. 1-4) show a controlled reduction of strength. Contrast Sample Nos. 3 with 7.

### C. Accelerated Heat Aging

Steel fasteners prepared with Sample Nos. 1-4 in accordance with the present invention demonstrated relatively consistent resistance to thermal degradation over time. This is contrasted to steel fasteners prepared with Sample Nos. 5-8 where a more pronounced reduction in break strength was seen over time under such elevated temperature conditions. More specifically, for examples comparing Sample No. 1 with Sample No. 5, where the percentages of the components are the same but the difference resides in the type of diluent used -- reactive diluent in Sample No. 1 or non-reactive diluent in Sample No. 5 --, it was seen that after a period of time of about 2 weeks at a temperature of about 204°C (400°F) only about 0.23 N.m (2 inch pounds) of break strength was lost with Sample No. 1 and after a period of 3 weeks at such temperature only 1.24 N.m (11 inch pounds) was lost. However, with steel fasteners assembled with Sample No. 5, about 2.82 N.m (25 inch pounds) of break strength was lost after a period of about two weeks at such temperatures and about 2.94 N.m (26 inch pounds) was lost after a period of three weeks. Similar performance differences were seen with the remaining samples (Nos. 2-4 and 6-8) which included a (meth)acrylate component, a maleimide component and a diluent (whether reactive or non-reactive) component.

Steel fasteners assembled with Sample No. 3 illustrated a prevailing torque of 23.8 N.m (211 inch pounds) after subjection to a temperature of about 204°C (400°F) for a period of time of about 1 week, and about 17.3 N.m (153 inch pounds) after a period of time of about three weeks of that temperature. Thus, it is seen that the addition of a reactive diluent component permits the reduced strength demonstrated by the cured adhesive formulation to be maintained even after subjection to elevated temperature conditions for extended periods of time.

The accelerated heat aging data in N.m and inch pounds obtained from the evaluation at a temperature of about 204°C (400°F) are set forth below in Table 4.

**Table 4**

| | Break Strength | Sample No. | | | | | | | |
|---|---|---|---|---|---|---|---|---|---|
| | | 1 | 2 | 3 | 4 | 5 | 6 | 7 | 8 |
| 1 week @ 204°C (900°F) | N.m | 15.9 | 16.5 | 20.9 | 18.0 | 25.0 | 21.9 | 17.2 | 7.2 |
| | (in.lbs.) | 141 | 146 | 185 | 159 | 221 | 194 | 152 | 64 |
| 2 weeks @ 209°C (400°F) | N.m | 15.7 | 16.6 | 18.8 | 16.4 | 22.1 | 21.0 | 9.6 | 6.0 |
| | (in.lbs.) | 139 | 147 | 166 | 145 | 196 | 186 | 85 | 53 |
| 3 weeks @ 204°C (900°F) | N.m | 14.7 | 14.0 | 16.9 | 13.2 | 22.0 | 18.2 | 7.0 | 5.0 |
| | (in.lbs.) | 130 | 124 | 150 | 117 | 195 | 161 | 62 | 44 |

Depending on the particular application for which the anaerobic adhesive composition is destined, different break strengths and prevailing torque values may be considered acceptable to accomplish the goal at hand. For many applications, break strength is an important parameter because once a fastener (e.g., a nut from a nut and bolt assembly) turns, the clamping force is effectively lost. The prevailing torque value, on the other hand, informs the user of when the fastener will come apart.

For certain applications, a high break strength value is particularly desirable. Examples of those applications are ones where a maintenance-free or tamper-proof machine is the type of apparatus with which such an anaerobic adhesive composition is to be used. For other applications, a lower break strength is desirable. Examples of such other applications include removable threadlockers where the machine is desirably maintained at regular intervals. Thus, it is seen that commercially-acceptable anaerobic adhesive compositions will have different break strength and prevailing torque values depending on the use to which that composition is placed.

With respect to controlled strength anaerobic adhesive compositions, desirable applications include those where the fastener assemblies are small such that the strength of the bond formed by the cured adhesive does not exceed the proof load of the assembly. In this way, the integrity of the fastener assembly is maintained without breaking, twisting or stretching, which could occur with a high strength anaerobic adhesive.

### [II and III omitted]

### IV. Preparation of Silicone-based Anaerobic Adhesives

### A. Preparation of SiMA

Into a 1 liter, 3-necked round bottom flask, equipped with a mechanical stirrer, thermometer and addition funnel, was charged 65.1 grams of trimethylchlorosilane, 79.2 grams of phenyltrimethoxysilane, 148.8 grams of methacryloxypropyl trimethoxysilane, and 83.2 grams of tetraethoxysilane. In addition, 120 grams of cyclohexane was also charged into the flask. Water (67.1 grams) was slowly added to the mixture over a period of about one-half hour with vigorous stirring. The temperature of the reaction mixture was maintained at less than 45°C during this mixing period. The mixture was heated to 70°C with nitrogen sparge to remove methanol. The reaction mixture was then cooled and diluted with approximately 300 ml cyclohexane. The cyclohexane solution was separated and washed repeatedly with water and solid sodium bicarbonate, filtering any solid salts generated, and residual sodium bicarbonate. Then, the cyclohexane was stripped under a nitrogen sparge at a temperature of about 60°C overnight. Cyclohexane was then removed under reduced pressure to yield a liquid resin with a viscosity of 4,000 cps. This resin is an example of a resin within the definition of SiMA.

### B. Formulation of Silicone-based Anaerobic Adhesives

Four formulations (Samples 46-49) were prepared with, among other things, SiMA and a (meth)acrylate component, including various combinations of HPMA and EBIPMA and including about 15% by weight of HVA-2 as a maleimide component.

Each of the four formulations contained a diluent component -- Sample Nos. 46-47 were formulated with vinyl-terminated polydimethyl siloxane, and Sample Nos. 48-49 were formulated with poly(ethylene glycol) (200) monooleate. Sample Nos. 46 and 48 contained 5% by weight, and Sample Nos. 47 and 49 contained about 10% by weight of the respective diluent component.

For each of the samples, 4.78% by weight of an anaerobic cure-inducing component (about 1.22% by weight of saccharin, about 0.28% by weight of acetyl phenylhydrazine, about 0:2% by weight of N,N-diethyl-*p*-toluidine, about 0.122% by weight of N,N-dimethyl-o-toluidine, about 0.32% by weight of maleic acid and about 2.26% by weight of cumene hydroperoxide) was included.

Initially, the compositions were prepared by adding with mechanical mixing at room temperature the appropriate amounts of the SiMA component, the (meth)acrylate component, the maleimide component, and the diluent component in any order to 50 ml beakers, and thereafter adding the appropriate amounts of the components of the desired anaerobic cure-inducing component (save cumene hydroperoxide).

The components were mixed for an appropriate period of time to allow for dissolution and/or dispersion, as the case may.be, of the solid components. An appropriate amount of cumene hydroperoxide was then added portionwise, with mixing continued for an additional period of time of about 0.5 hours.

The so-formed formulations were stored for further use by covering the beaker ensuring that an air pocket remained between the surface of the formulation and the cover.

The components and amounts thereof used in by weight percentages in each of the four formulations are presented below in Table 10. The additional weight percent to reach 100% is from the anaerobic cure-inducing composition and viscosity modifiers, such as silica fillers.

**Table 10**

| Sample No | Acrylate component | | | Maleimide component |
|---|---|---|---|---|
| | Total | SiMA | Other Acrylate | |
| 46 | 66.38 | 52.68 | HPMA (9.56) EPIBMA (4.14) | 15.02 |
| 47 | 61.38 | 48.70 | HPMA (8.84) EPIBMA (3.84) | 15.02 |
| 48 | 66.38 | 52.68 | HPMA (9.56) EPIBMA (4.14) | 15.02 |
| 49 | 61.38 | 48.70 | HPMA (8.84) EPIBMA (3.84) | 15.02 |

### B. Application and Ambient Temperature

### Cure of Silicone-based Anaerobic Adhesives

The sample formulations set forth in Table 10 and described in Example IV(B) were applied to five sets of degreased 3/8 x 16 steel fastener assemblies, and then allowed to cure at room temperature for a period of time of about 24 hours. After the cure time, the fasteners were evaluated for break strength (i.e., torque required to turn the nut on the bolt of the fastener assembly), data for which as an average of the five sets are shown below in Table 11.

**Table 11**

| Sample No. | | 46 | 47 | 48 | 49 |
|---|---|---|---|---|---|
| Break Strength | N.m | 25.0 | 22.6 | 29.2 | 23.5 |
| | (in.lbs.) | (221) | (200) | (258) | (208) |

These data indicate that all four formulations function at room temperature like a traditional anaerobic (meth)acrylate-based adhesives.

### C. Hot Strength

Initially, the steel fasteners assembled with Sample Nos. 46-53 were evaluated for their hot strength performance after curing at room temperature for a period of about 24 hours and thereafter subjected to elevated temperatures of about 204°C (400°F) and about 260°C (500°F) for a period of time of about 2 hours. The fasteners were evaluated for break strength at that temperature, hot strength data for which are shown below in Table 12.

**Table 12**

| Hot strength | | Sample No. | | | |
|---|---|---|---|---|---|
| | | 46 | 47 | 48 | 49 |
| 204°C (400°F) | N.m | 29.0 | 28.9 | 28.2 | 26.0 |
| | in.lbs. | 257 | 256 | 250 | 230 |
| 260°C (500°F) | N.m | 24.9 | 25.9 | 21.5 | 18.1 |
| | in.lbs. | 220 | 229 | 190 | 160 |

These data indicated that hot strength is increased due to presence of the maleimide component.

### D. Heat Aging

Steel fasteners prepared with Sample Nos. 46-49 in accordance with the present invention demonstrated relatively consistent resistance to thermal degradation over time.

The heat aging data in N.m and inch pounds obtained from the evaluation at a temperature of about 204°C (400°F) are set forth below in Table 13.

**Table 13**

| | Break Strength | Sample No. | | | |
|---|---|---|---|---|---|
| | | 46 | 47 | 48 | 49 |
| 1 week @ 204°C (400°F) | N.m/time | 15.9 | 16.5 | 25.0 | 21.9 |
| | (in.lbs./time) | (141) | (146) | (221) | (194) |
| 2 weeks @ 204°C (400°F) | N.m/time | 15.7 | 16.6 | 22.1 | 21.0 |
| | (in.lbs./time) | (139) | (147) | (196) | (186) |
| 3 weeks @ 204°C (400°F) | N.m/time | 14.7 | 14.0 | 22.0 | 18.2 |
| | (in.lbs./time) | (130) | (124) | (195) | (161) |

### E. Formulation of Silicone-based Anaerobic Adhesives for Re-oiled Substrates

In this example, twenty-three formulations were prepared in a manner comparable to that described in Example IV(B). The components of the formulations are recited below in Table 14. The additional weight percent to reach 100% is made up of the anaerobic cure-inducing component, and/or chelator and viscosity modifiers, such as silica fillers.

**Table 14**

| Sample No. | Acrylate component | | | Maleimide component |
|---|---|---|---|---|
| | Total | SiMA | Other Acrylate | |
| 56 | 83.22 | 56.22 | HEMA (27) | 10 |
| 57 | 77 | 50 | HPMA (9) / EBIPMA (18) | 10 |
| 58 | 77.47 | 50 | EBIPMA (27.47) | 15 |
| 59 | 67.47 | 50 | EBIPMA (17.47) | 15 |
| 60 | 72.47 | 50 | HPMA (22.47) | 15 |
| 61 | 67.47 | 50 | HPMA (17.47) | 15 |
| 62 | 77.47 | 50 | HPMA (27.47) | 15 |
| 63 | 77.47 | 38.74 | EBIPMA (38.73) | 15 |
| 64 | 72.47 | 36.24 | EBIPMA (36.23) | 15 |
| 69 | 72.87 | 50.45 | HPMA (22.42) | 15.1 |
| 70 | 77.89 | 50.45 | HPMA (27.44) | 15.1 |

The individual components used to prepare the SiMA were reacted together as described in Example IV(A), supra. Those components and amounts in mole percent used for each of the list SiMAs are set forth below in Table 15.

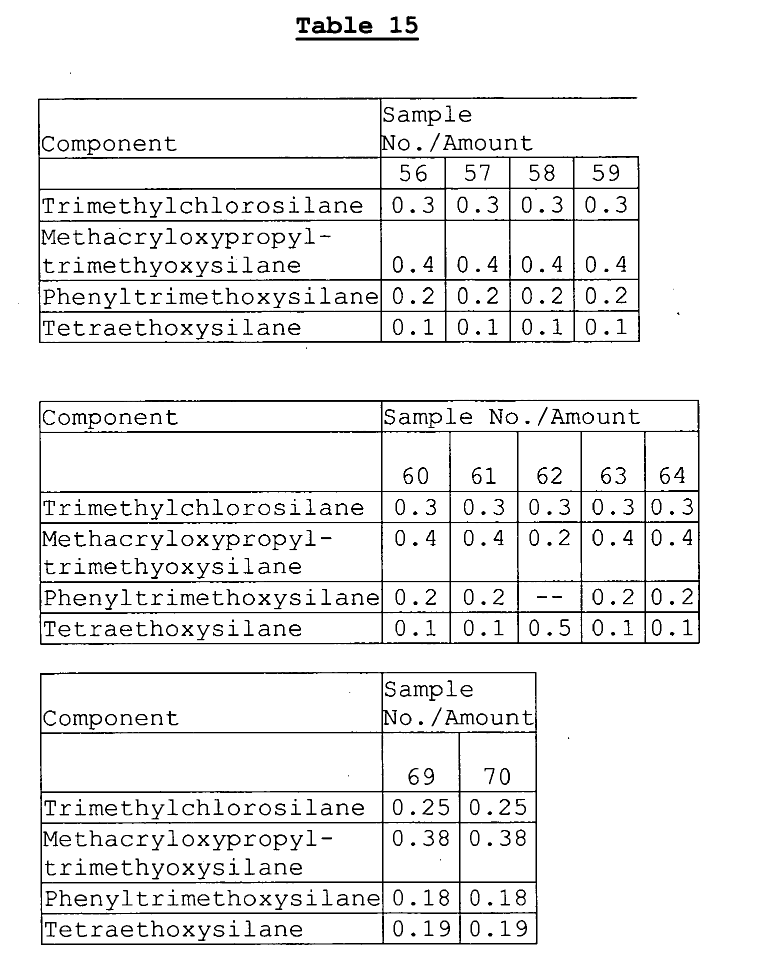

All of the samples contained 1.50 percent by weight of silica as a filler, and certain of the samples contained a bis-fumarate derivative and a chelator (i.e., EDTA). Sample Nos. 56, 59, 61 and 64 contained the bis-fumarate in the following respective amounts percent by weight: 9, 10, 10 and 5. The amounts in percent by weight of the chelator were: 1.30 (Sample Nos. 69 and 70), 1.35 (Sample Nos. 56 and 57), 1.50 (Sample Nos. 58-64) .

### F. Application and Ambient Temperature Cure of Silicone-based Anaerobic Adhesives for Re-oiled Substrates

Sample Nos. 56-64, 69 and 70 were applied to five sets of degreased 3/8 x 16 steel fastener assemblies and five sets of such assemblies, the nuts and bolts of which after degreasing were then re-oiled with a 5% oil in water emulsion where the nuts and bolts were immersed in the emulsion and thereafter dried.

These assemblies were then allowed to cure at room temperature for a period of about one hour. The break strength and prevailing torque was measured and reported below in Table 16.

An additional five sets of each were assembled with the anaerobic adhesive and allowed to cure at room temperature for a period of time of about 24 hours. The break strength and prevailing torque of the five sets were measured and are reported as an average below in Table 17.

**Table 16 -- 1 Hour Cure**

| Sample No. | Assembly | | | | | | | |
|---|---|---|---|---|---|---|---|---|
| | Degreased | | | | Re-oiled | | | |
| | Break Strength | | Prevailing Torque | | Break Strength | | Prevailing Torque | |
| | N.m | (in.lbs.) | N.m | (in.lbs.) | N.m | (in.lbs.) | N.m | (in.lbs.) |
| 56 | 38.1 | (337) | 38.6 | (342) | 22.3 | (197) | 31.2 | (276) |
| 57 | 30.2 | (267) | 35.9 | (318) | 13.6 | (120) | 27.6 | (244) |
| 58 | - | - | - | - | 2.6 | (23) | 4.1 | (36) |
| 59 | - | - | - | - | 3.3 | (29) | 4.7 | (42) |
| 60 | 24.6 | (218) | 33.4 | (296) | 19.0 | (168) | 28.6 | (253) |
| 61 | 18.3 | (162) | 27.9 | (247) | 15.0 | (133) | 23.7 | (210) |
| 62 | 32.2 | (285) | 34.7 | (307) | 19.3 | (171) | 31.5 | (279) |
| 63 | 5.5 | (49) | 7.2 | (64) | 9.4 | (83) | 12.5 | (111) |
| 64 | 7.0 | (62) | 6.6 | (58) | 8.4 | (74) | 18.6 | (165) |
| 69 | 26.6 | (235) | 32.4 | (287) | 18.9 | (167) | 24.2 | (214) |
| 70 | 27.5 | (243) | 26.0 | (230) | 18.5 | (164) | 22.4 | (198) |

**Table 17 -- 24 hour cure**

| Sample No. | Assembly | | | | | | | |
|---|---|---|---|---|---|---|---|---|
| | Degreased | | | | Re-oiled | | | |
| | Break Strength | | Prevailing Torque | | Break Strength | | Prevailing Torque | |
| | N.m | (in.lbs.) | N.m | (in.lbs.) | N.m | (in.lbs.) | N.m | (in.lbs.) |
| 56 | 33.3 | (295) | 30.8 | (273) | 34.7 | (307) | 40.9 | (362) |
| 57 | 25.5 | (226) | 33.1 | (293) | 14.3 | (127) | 29.9 | (265) |
| 58 | 28.6 | (253) | 36.6 | (324) | 21.7 | (192) | 24.3 | (215) |
| 59 | 27.0 | (239) | 20.1 | (178) | 32.3 | (286) | 25.1 | (222) |
| 60 | 28.5 | (252) | 24.3 | (215) | 29.7 | (263) | 20.7 | (183) |
| 61 | 33.8 | (299) | 18.1 | (160) | 31.0 | (274) | 19.1 | (169) |
| 62 | 34.2 | (302.5) | 29.8 | (264) | 22.5 | (199) | 22.3 | (197) |
| 63 | 25.1 | (222) | 33.2 | (294) | 13.7 | (121) | 33.2 | (294) |
| 64 | 24.5 | (217) | 35.5 | (314) | 14.7 | (130) | 31.7 | (281) |
| 69 | 31.3 | (277) | 30.2 | (267) | 10.4 | (92) | 25.0 | (221) |
| 70 | 27.5 | (243) | 32.0 | (283) | 10.5 | (93) | 22.7 | (201) |

### G. Heat Aging

Finally, two additional five sets of each assembly were cured at room temperature for a period of time of about 24 hours, and then subjected to heat aging studies. The heat aging studies here included measuring the break strength of nut and bolt assemblies which had been cured at room temperature for a period of time of about 24 hours and thereafter subjected first to an elevated temperature of about 204°C (400°F) for a period of time of about 1 week (7 days), or alternatively for a period of time of about 260°C (500°F) for a period of time of 3 days. The respective assemblies were then tested when they reached room temperature. The break strength of each assembly was measured and an average of the five sets is reported below in Table 18.

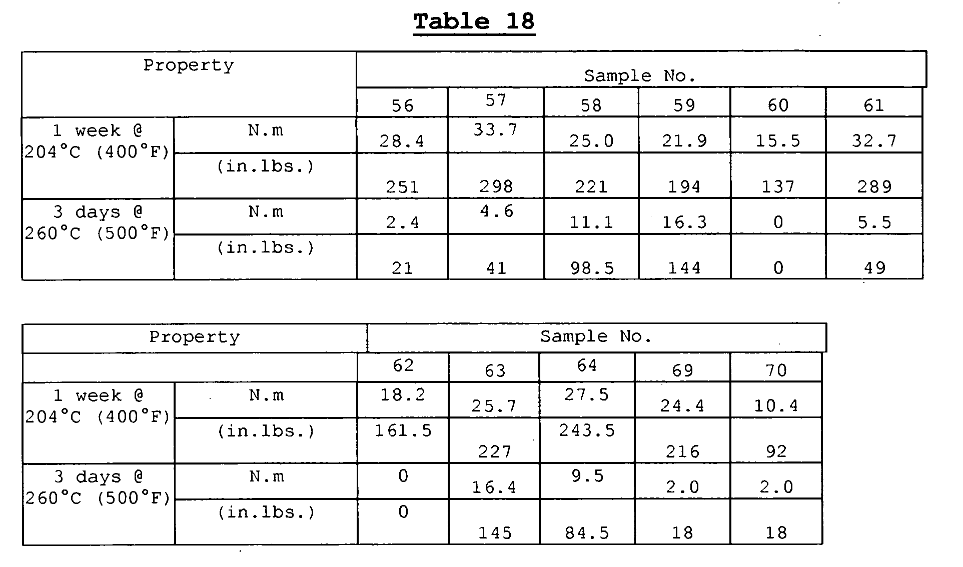

### V. Poly-hydroxyalkane Effect on Silicon-based Anaerobic Adhesive

In this example, the effect of the addition of a poly-hydroxyalkane on the strength profile of cured anaerobic silicone formulations was determined. The formulation set forth below in Table 19 was used as a control (Sample No. 77).

**Table 19**

| Component | | Amount (weight%) |
|---|---|---|
| SiMA | | 60 |
| HPMA | 10.28 | 14.78 |
| EPIBMA | 4.5 | |
| HVA-2 | | 15 |
| EDTA* | | 0.04 |
| Anaerobic cure-inducing composition | | 4.59 |

| | | |
|---|---|---|
| *dissolved in 0.9g of proplyene glycol and 0.3g of water | | |

The remaining 5.59% by weight was made up of fillers and dye.

Formulations with different poly-hydroxyalkanes in varying amounts were prepared with the same remaining components as set forth below in Table 19. For each percent by weight poly-hydroxyalkane added to a sample formulation, that percent by weight amount of SiMA was omitted from the sample formulation.

**Table 20**

| **Sample No.** | **Poly-hydroxyalkane** | **Amount (weight%)** |
|---|---|---|
| **78** | **1,2-Propanediol** | **1** |
| **79** | **1,2-Propanediol** | **3** |
| **80** | **1,2-Propanediol** | **4** |
| **81** | **1,2-Propanediol** | **5** |
| **82** | **1,3-Propanediol** | **1** |
| **83** | **1,3-Propanediol** | **2** |
| **84** | **1,3-Propanediol** | **3** |
| **85** | **1,3-Propanediol** | **4** |
| **86** | **1,6-Hexanediol** | **1** |
| **87** | **1,6-Hexanediol** | **3** |
| **88** | **1,6-Hexanediol** | **4** |
| **89** | **1,6-Hexanediol** | **5** |
| **90** | **1,6-Hexanediol** | **6** |

Each of Sample Nos. 77-90 were applied to five sets of degreased 3/8 x 16 steel fastener assemblies, and allowed to cure for a period of time of up to 15 minutes. The fixture times are set forth below in Table 21.

These samples were also applied to steel fastener assemblies, and allowed to cure at ambient temperature conditions for a period of time of about 1 hour. Break strength and prevailing torque measurements were obtained for each sample and are also set forth below in Table 21, with the upper value representing break strength and the lower value representing prevailing torque.

Next, the samples were evaluated for cure strength at ambient temperature conditions after periods of time of about 24 hours and 72 hours. Break strength and prevailing torque measurements were again obtained for each sample and are too set forth below in Table 21. The upper value represents break strength and the lower value represents prevailing torque.

The cure strength of the samples at ambient temperature conditions after a period of time of 1824 hours was compared on 3/8 x 16 zinc and stainless steel substrates. Break strength and prevailing torque measurements were again obtained and are set forth below in Table 21.

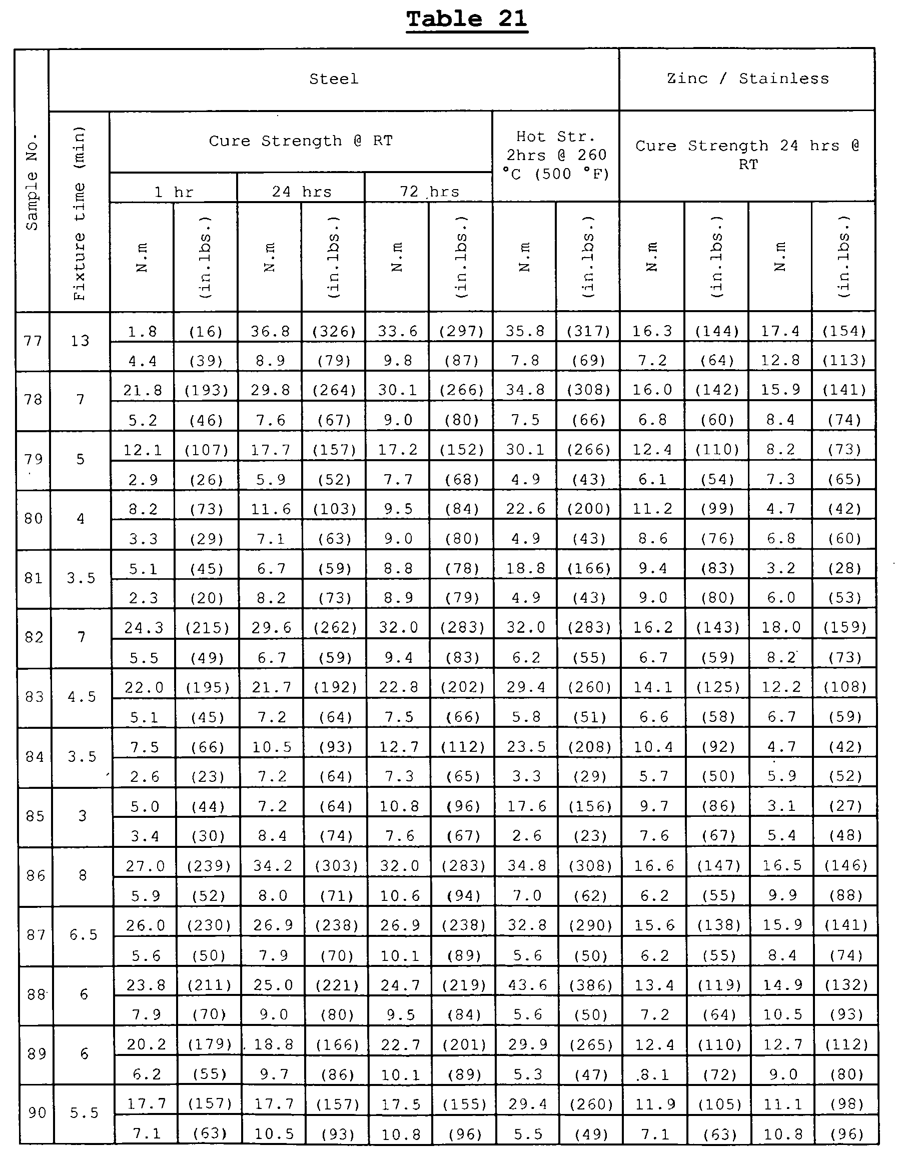

Heat aging studies were performed on Samples Nos. 77-90. More specifically, Sample Nos. 77-90 were applied to 3/8 x 16 steel nut and bolt assemblies, allowed to cure at ambient temperature conditions for a period of time of about 24 hours and subjected to elevated temperature conditions for a period of time of about 1 to about 6 weeks. The temperatures, durations and break strength and prevailing torque data are set forth below in Tables 22a and 22b. The upper value represents the break strength and the lower value represents the prevailing torque.

**Table 22a**

| Heat Aging (time @ temp.) | Sample No.n N.m (in. lbs) | | | | | | |
|---|---|---|---|---|---|---|---|
| | 77 | 78 | 79 | 80 | 81 | 82 | 83 |
| 1 week @ 204°C (400°F) | 18.6 (165) | 31.7 (281) | 17.9 (158) | 15.3 (135) | 8.9 (79) | 29.4 (260) | 21.2 (188) |
| | 29.4 (260) | 18.3 (162) | 19.3 (171) | 17.3 (153) | 11.1 (98) | 17.7 (157) | 18.1 (160) |
| 2 weeks @ 204°C (400°F) | 25.8 (228) | 27.7 (245) | 7.6 (67) | 8.0 (71) | 5.3 (47) | 25.4 (225) | 19.1 (169) |
| | 16.0 (142) | 17.5 (155) | 13.0 (115) | 9.0 (80) | 8.6 (76) | 17.6 (156) | 19.4 (172) |
| 4 weeks @ 204°C (400°F) | 15.5 (137) | 13.9 (123) | 5.8 (51) | 4.9 (43) | 3.6 (32) | 12.2 (108) | 7.5 (66) |
| | 16.0 (142) | 17.1 (151) | 10.2 (90) | 7.5 (66) | 6.1 (54) | 14.7 (130) | 13.3 (118) |
| 6 weeks @ 204°C (400°F) | 9.7 (86) | 8.9 (79) | 4.0 (35) | 3.6 (32) | 2.8 (25) | 7.8 (69) | 5.7 (50) |
| | 14.9 (132) | 14.1 (125) | 6.3 (56) | 5.2 (46) | 4.2 (37) | 13.3 (118) | 8.9 (79) |
| 1 week @ 232°C (450°F) | 23.0 (204 | 17.9 (158) | 5.5 (49) | 4.4 (39) | 4.2 (37) | 20.9 (185) | 9.6 (85) |
| | 15.8 (140) | 13.2 (117) | 7.6 (67) | 6.9 (61) | 5.4 (48) | 13.7 (121) | 11.9 (105) |
| 4 weeks @ 232°C (450°F) | 5.0 (44) | 2.6 (23) | 2.0 (18) | 2.0 (18) | 2.0 (18) | 3.7 (33) | 2.5 (22) |
| | 5.4 (48 | 3.1 (27) | 2.1 (19) | 1.9 (17) | 2.0 (18) | 4.0 (35) | 2.6 (23) |
| 6 weeks @ 232°C (450°F) | 2.0 (18) | 1.4 (12.5) | 0.6 (5.5) | 0.6 (5.3) | 0.6 (5.3) | 1.5 (13.7) | 0.8 (7.5) |
| | 2.3 (20) | 1.8 (16) | 1.0 (9) | 0.8 (7) | 0.8 (7.2) | 2.0 (17.3) | 1.2 (11) |

**Table 22b**

| Heat Aging (time @ temp.) | Sample No. N.m (in lbs) | | | | | | |
|---|---|---|---|---|---|---|---|
| | 84 | 85 | 86 | 87 | 88 | 89 | 90 |
| 1 week @ 204°C (400°F) | 21.2 (188) | 12.2 (108) | 35.0 (310) | 29.3 (259) | 30.5 (270) | 27.0 (239) | 21.0 (186) |
| | 14.3 (127) | 12.3 (109) | 19.9 (176) | 18.8 (166) | 17.3 (153) | 16.3 (144) | 18.5 (164) |
| 2 weeks @ 204°C (400°F) | 8.9 (79) | 7.8 (69) | 29.3 (259) | 26.2 (232) | 22.5 (199) | 16.7 (148) | 12.7 (112) |
| | 10.6 (94) | 8.4 (74) | 18.5 (164) | 17.5 (155) | 18.1 (160) | 15.5 (137) | 15.1 (134) |
| 4 weeks @ 204°C (400°F) | 5.5 (49) | 5.1 (45) | 16.8 (149) | 11.5 (102) | 10.7 (95) | 8.5 (75) | 5.4 (48) |
| | 7.9 (70) | 6.3 (56) | 16.6 (147) | 14.3 (127) | 13.4 (119) | 10.7 (95) | 8.9 (79) |
| 6 weeks @ 204°C (400°F) | 5.0 (44) | 4.3 (38) | 12.9 (114) | 7.7 (68) | 6.6 (58) | 4.9 (43) | 4.1 (36) |
| | 6.3 (56) | 5.1 (45) | 15.7 (139) | 11.4 (101) | 9.5 (84) | 8.6 (76) | 6.6 (58) |
| 1 week @ 232°C (450°F) | 5.2 (46) | 3.8 (34) | 18.4 (163) | 16.0 (142) | 15.0 (133) | 11.3 (100) | 3.5 (31) |
| | 6.3 (56) | 4.7 (42) | 14.3 (127) | 11.6 (103) | 10.7 (95) | 7.9 (70) | 3.4 (30) |
| 4 weeks @ 232°C (450°F) | 2.3 (20) | 2.0 (18) | 2.9 (26) | 2.6 (23) | 2.7 (24) | 2.4 (21) | 2.1 (19) |
| | 1.9 (17) | 1.7 (15) | 3.2 (28) | 2.6 (23) | 2.5 (22) | 2.4 (21) | 1.7 (15) |
| 6 weeks @ 232°C (450°F) | 0.8 (6.7) | 0.6 (5.5) | 1.5 (13) | 1.2 (10.7) | 1.4 (12.2) | 1.2 (10.7) | 0.5 (4.2) |
| | 1.0 (8.7) | 0.7 (6.5) | 1.5 (13) | 1.2 (11) | 1.4 (12.7) | 1.1 (9.8) | 0.4 (3.5) |

In Table 23 below, cure strength on re-oiled steel in terms of break strength and prevailing torque under ambient temperature conditions at 1 hour, 24 hours and 72 hours, hot strength performance data for certain samples maintained at a temperature of about 260°C (500°F) for a period of time of about 2 hours and tested at that temperature, heat aging performance data at elevated temperature conditions of about 204°C (400°F) for a period of time of about 1 week and tested at that temperature are provided. The upper value represents break strength and the lower value represents prevailing torque.

**Table 23**

| Sample No. | **Re-oiled Steel N.m (in lbs)** | | | | |
|---|---|---|---|---|---|
| | Cure Strength @ RT | | | Hot Str. 2hrs @ 260°C (500°F) | Heat Aging 1 week @ 204°C (400°F) 5 |
| | 1 hr | 24 hrs | 72 hrs | | |
| 77 | 18.0(159) | 18.3(162) | 29.0(257) | 32.9(291) | 26.5(235) |
| | 7.3(65) | 14.6(129) | 12.9(110) | 8.4(74) | 23.8(211) |
| 78 | 19.1(169) | 26.9(238) | 30.8(273) | - - | 28.9(256) |
| | 8.2(73) | 13.7(121) | 12.2(108) | - - | 22.1(196) |
| 79 | 16.3(149) | 21.2(188) | 20.5(181) | 29.6(262) | 25.0(221) |
| | 10.8(96) | 13.9(123) | 15.4 (136) | 7.0(62) | 21.4(189) |
| 80 | 13.8(122) | 16.2(143) | 14.2(126) | - - | 19.9(176) |
| | 7.5(66) | 13.7(121) | 19.5(128) | - - | 19.8(175) |
| 81 | 8.0(71) | 13.6(120) | 11.0(97) | - - | 12.2(108) |
| | 5.4 (48) | 12.3(109) | 10.6(94) | - - | 15.0(133) |
| 82 | 23.7(210) | 28.9(256) | 27.3(242) | - - | 26.0(230) |
| | 8.1(72) | 19.1(125) | 12.2(108) | - - | 22.4(198) |
| 83 | 22.5(199) | 21.8(193) | 24.5(217) | 31.7 (281) | 23.8(211) |
| | 8.5(75) | 15.5(137) | 13.6(120) | 7.0 (62) | 22.4(198) |
| 84 | 12.5(111) | 17.2(152) | 15.6(138) | - - | 26.9(238) |
| | 11.1(98) | 12.2(108) | 11.3(100) | - - | 18.0(159) |
| 85 | 7.2(69) | 10.5(93) | 11.2(99) | - - | 21.1(187) |
| | 5.6(50) | 12.2(108) | 10.3(91) | - - | 16.3(144) |
| 86 | 22.9(198) | 25.2(223) | 29.9(265) | - - | 31.3(277) |
| | 7.3(65) | 14.0(124) | 12.7(112) | - - | 24.2(214) |
| 87 | 26.8(237) | 25.3(224) | 25.5(226) | - - | 26.9(238) |
| | 8.2(73) | 12.1(107) | 14.9(132) | - - | 23.7(210) |
| 88 | 23.8(211) | 23.8(211) | 23.5(208) | - - | 27.7(245) |
| | 9.5(89) | 12.8(113) | 15.8(190) | - - | 24.0(212) |
| 89 | 20.6(182) | 21.7(192) | 20.8(184) | - - | 26.3(233) |
| | 7.9(70) | 12.9(110) | 14.9(132) | - - | 22.5(199) |
| 90 | 15.9(141) | 16.5(196) | 17.2(152) | 25.2 (223) | 20.8(184) |
| | 12.2(108) | 16.9(150) | 15.8(190) | 5.6 (50) | 22.7(201) |

In Tables 24a and b below, data is presented demonstrating the beneficial effect of the poly-hydroxyalkane component on an anaerobic adhesive formulation to enhance the ability to bond re-oiled substrate surfaces.

More specifically, in this example, steel fastener assemblies were degreased and re-oiled. Cure strength data at ambient temperature conditions for periods of time of about 1 hour, about 24 hours and about 72 hours are set forth in Table 24a for the samples on which re-oiled and degreased substrates are compared relative to steel fastener assemblies without such treatment. Table 24b sets forth data for hot strength and heat aging, comparing such degreased and re-oiled steel fasteners relative to steel fasteners which have not been subjected to such treatment. In Tables 24a and b, the upper value represents break strength and the lower value represents prevailing torque.

**Table 24a**

| **Sample No.** | **Ratio on Re-oiled/Degreased Steel Fasteners [%]** | | |
|---|---|---|---|
| | **Cure Str. lhr@RT** | **Cure Str.@RT** | |
| | | **24hrs** | **72hrs** |
| **77** | **81** | **50** | **86** |
| | **167** | **163** | **126** |
| **78** | **88** | **90** | **103** |
| | **159** | **181** | **135** |
| **79** | **135** | **120** | **119** |
| | **369** | **237** | **200** |
| **80** | **167** | **139** | **150** |
| | **228** | **192** | **160** |
| **81** | **158** | **203** | **124** |
| | **240** | **149** | **119** |
| **82** | **98** | **98** | **86** |
| | **147** | **212** | **130** |
| **83** | **102** | **101** | **107** |
| | **167** | **214** | **182** |
| **84** | **168** | **163** | **123** |
| | **426** | **169** | **153** |
| **85** | **145** | **145** | **103** |
| | **167** | **146** | **136** |
| **86** | **83** | **74** | **94** |
| | **125** | **175** | **119** |
| **87** | **103** | **94** | **95** |
| | **146** | **153** | **148** |
| **88** | **100** | **95** | **95** |
| | **120** | **141** | **167** |
| **89** | **102** | **116** | **92** |
| | **127** | **128** | **148** |
| **90** | **90** | **93** | **98** |
| | **171** | **161** | **146** |

**Table 24b**

| Sample No. | Degreased Steel Fasteners [%] | |
|---|---|---|
| | Hot Str. 2hr@260°C (500°F) | Heat Aging 1 week@204°C (400°F) |
| 77 | 92 | 90 |
| | 107 | 128 |
| 78 | - | 91 |
| | - | 121 |
| 79 | 98 | 140 |
| | 144 | 111 |
| 80 | - | 130 |
| | - | 114 |
| 81 | - | 136 |
| | - | 136 |
| 82 | - | 88 |
| | - | 126 |
| 83 | 108 | 112 |
| | 122 | 124 |
| 84 | - | 127 |
| | - | 125 |
| 85 | - | 173 |
| | - | 132 |
| 86 | - | 89 |
| | - | 122 |
| 87 | - | 92 |
| | - | 127 |
| 88 | - | 91 |
| | - | 139 |
| 89 | - | 97 |
| | - | 138 |
| 90 | 86 | 99 |
| | 102 | 123 |

The upper value represents break strength and the lower value represents prevailing torque.

### VI. Polymeric Plasticizer Effect on Silicon-based Anaerobic Adhesives

A desirable medium strength formulation according to this invention provides the following components in the recited amounts: SiMA (40.2%), HPMA (10%), EBIPMA (5%), HVA-2 (10%), "UNIFLEX" 300 polymeric plasticizer (20%), DTPA chelator (0.7%), with the remaining 14.1% by weight made up of fillers and the anaerobic cure-inducing composition (Sample No. 91).

The fixture time, cure strength, hot strength and heat aging results on degreased steel fastener assemblies were measured and are present below in Table 25a. The cure strength on re-oiled steel, zinc and stainless steel fastener assemblies were also measured, data for those results are set forth below in Table 25b. Here again the upper value represents break strength and the lower value represents torque.

**Table 25a**

| Sample No. | Fixture Time (mins) | Degreased Steel | | | | |
|---|---|---|---|---|---|---|
| | | Cure Strength @ RT N_{.}m (in. lbs) | | | Hot Str. 2hrs @ 260°C (500°F) | Heat Aging 1 week @ 204°C (900°F) |
| | | 1 hr | 24 hrs | 72 hrs | | |
| 91 | 14 | 6.9(61) | 18.5(164) | 20.1(178) | 10.2(90) | 31.0(274) |
| | | 3.7(33) | 5.2 (46) | 6.1(54) | 2.4(21) | 11.4(101) |

**Table 25b**

| Sample No. | Cure Strength @ RT | | | | | | |
|---|---|---|---|---|---|---|---|
| | Re-oiled Steel | | | Zinc | | Stainless Steel | |
| | 1 hr | 24 hrs | 72 hrs | 24 hrs | 72 hrs | 24 hrs | 72 hrs |
| 91 | 5.5(49) | 19. 7 (174) | 21.5(190) | 18.1(160) | 20.7(183) | 13.9(123) | 15.6(138) |
| | 3.3(29) | 5.3(47) | 5.8(51) | 4.5(40) | 4.9(43) | 3.4(30) | 3.5(31) |

Depending on the particular application for which the anaerobic adhesive composition is destined, different break strengths and prevailing torque values may be considered acceptable to accomplish the goal at hand. For many applications, break strength is an important parameter because once a fastener (e.g., a nut from a nut and bolt assembly) turns, the clamping force is effectively lost. The prevailing torque value, on the other hand, is a measure of the effort required to disassemble the fastener, and informs the user of when the fastener will come apart.

For certain applications, a high break strength value is particularly desirable. Examples of those applications are ones where a maintenance-free or tamper-proof machine is the type of apparatus with which such an anaerobic adhesive composition is to be used. For other applications, a lower break strength is desirable. Examples of such other applications include removable threadlockers where the machine is desirably maintained at regular intervals. Thus, it is seen that commercially-acceptable anaerobic adhesive compositions will have different break strength and prevailing torque values depending on the use to which that composition is placed.

With respect to controlled strength anaerobic adhesive compositions, desirable applications include those where the fastener assemblies are small such that the strength of the bond formed by the cured adhesive does not exceed the proof load of the assembly. In this way, the integrity of the fastener assembly is maintained without the occurrence of breaking, traditional twisting or stretching which could occur with a high strength anaerobic adhesive.

## Claims

1. An anaerobically curing composition comprising:
(a) a silicone fluid formed as the reaction product of at least one first silane of the formula, RₙSi(X)₄₋ₙ, wherein the R groups may be the same or different and selected from the group consisting of hydrogen, C₁-C₁₂ alkyl, C₆-C₁₂ aryl, C₇-C₁₈ arylalkyl, C₇-C₁₈ alkylaryl, haloalkyl, haloaryl and monovalent ethylenically unsaturated radicals excluding (meth)acryloxy functional groups, X is a hydrolyzable functionality, and n is an integer of from 0 to 3, and at least one second silane of the formula, R¹ₘR²ₚSi(X)₄₋₍ₘ₊ₚ₎, wherein R¹ is a (meth) acrylic functional group and R² may be the same or different and is a member selected from the group consisting of monovalent ethylenically unsaturated radicals, hydrogen, C₁-C₁₂ alkyl, C₆-C₁₂ aryl, C₇-C₁₈ arylalkyl, and C₇-C₁₈ alkylaryl, X is a hydrolyzable functionality, m is an integer from 1 to 3, and m+p is an integer from 1 to 3;
(b) a (meth)acrylate component;
(c) an anaerobic cure-inducing component, and
(d) a further component selected from
(d₁) a maleimide component;
(d₂) a mono- or poly-hydroxyalkane component; and
(d₃) a plasticizer component.

2. An anaerobically curing composition as claimed in claim 1, wherein the further component (d) is (d₁) a maleimide component.

3. An anaerobically curing composition as claimed in claim 2, wherein the maleimide component (d₁) is a maleimide which remains substantially unreacted at ambient temperature but becomes reactive at temperatures of 163°C and greater

4. An anaerobically curing composition as claimed in claim 2, wherein the maleimide component (d₁) is a maleimide conforming to the following structures: 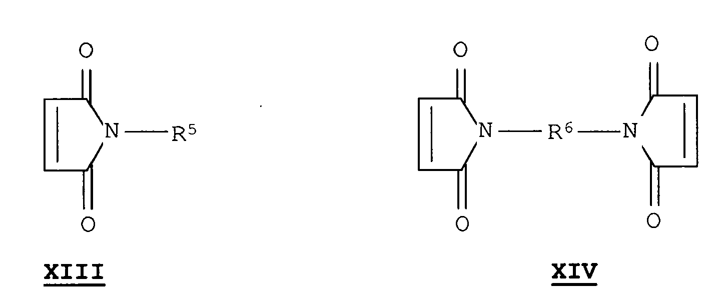 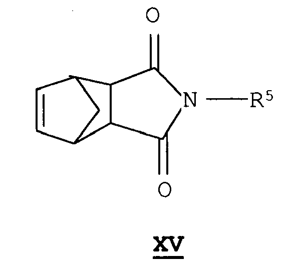 and 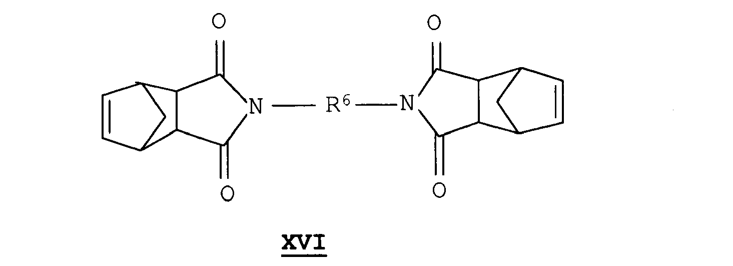 where R⁵ and R⁶ are selected from alkyl, aryl and nitro, hydroxyl and alkyl derivatives thereof, cycloalkyl, aralkyl and alkaryl groups, which contain from about 6 to 100 carbon atoms, any of which may be substituted or interrupted as the case may be with silane, silicone, oxygen, halogen, carbonyl, hydroxyl, ester, carboxylic acid, urea, urethane, carbamate, sulfur, sulfonate or sulfone.

5. An anaerobically curing composition as claimed in claim 4, wherein R⁶ represents the group 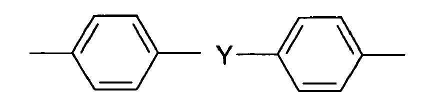 where the phenyl groups are substituted at one or more positions with linear, branched or cyclic alkyl, alkenyl, alkynyl, alkoxy, or aryl groups having from 1 to 20 carbon atoms, with or without substitution by halogen, hydroxy, nitrile, ester, amide or sulfate; and Y represents O, S, carbonyl, sulfone, or primary or secondary methylene groups substituted with linear, branched or cyclic alkyl, alkenyl, alkynyl, alkoxy or aryl groups having from 1 to 20 carbon atoms, with or without substitution by halogen, hydroxy, nitrile, ester, amide or sulfate.

6. An anaerobically curing composition as claimed in claim 1, wherein the further component (d) is (d₂) a mono- or poly-hydroxyalkane component.

7. An anaerobically curing composition as claimed in claim 1, wherein the further component (d) is (d₃) a plasticizer component.

## Patentansprüche

1. Eine anaerob härtende Zusammensetzung, umfassend:
(a) ein Silikonfluid, gebildet als das Reaktionsprodukt aus wenigstens einem ersten Silan der Formel RₙSi(X)₄₋ₙ, wobei die R-Gruppen gleich oder verschieden sein können und ausgewählt aus der Gruppe, bestehend aus Wasserstoff, C₁-C₁₂-Alkyl, C₆-C₁₂-Aryl, C₇-C₁₈-Arylalkyl, C₇-C₁₈-Alkylaryl, Halogenalkyl, Halogenaryl und monovalenten ethylenisch ungesättigten Resten, mit Ausnahme von (meth)acryloxyfunktionellen Gruppen, X eine hydrolysierbare Funktionalität ist und n eine ganze Zahl von 0 bis 3 ist, und wenigstens einem zweiten Silan der Formel R¹ₘR²ₚSi(X)₄₋₍ₘ₊ₚ₎, wobei R¹ eine (meth)acrylfunktionelle Gruppe ist und R² gleich oder verschieden sein kann und ein Element ist, ausgewählt aus der Gruppe, bestehend aus monovalenten ethylenisch ungesättigten Resten, Wasserstoff, C₁-C₁₂-Alkyl, C₆-C₁₂-Aryl, C₇-C₁₈-Arylalkyl und C₇-C₁₈-Alkylaryl, X eine hydrolysierbare Funktionalität ist, m eine ganze Zahl von 1 bis 3 ist und m+p eine ganze Zahl von 1 bis 3 ist,
(b) eine (Meth)acrylatkomponente,
(c) eine die anaerobe Härtung hervorrufende Komponente und
(d) eine weitere Komponente, ausgewählt aus
(d₁) einer Maleinimidkomponente,
(d₂) einer Mono- oder Polyhydroxyalkankomponente und
(d₃) einer Plastifizierungsmittelkomponente.

2. Eine wie in Anspruch 1 beanspruchte anaerob härtende Zusammensetzung, wobei die weitere Komponente (d) eine Maleinimidkomponente (d₁) ist.

3. Eine wie in Anspruch 2 beanspruchte anaerob härtende Zusammensetzung, wobei die Maleinimidkomponente (d₁) ein Maleinimid ist, das bei Umgebungstemperatur im Wesentlichen unreagiert bleibt, bei Temperaturen von 163 °C und darüber jedoch reaktiv wird.

4. Eine wie in Anspruch 2 beanspruchte anaerob härtende Zusammensetzung, wobei die Maleinimidkomponente (d₁) ein Maleinimid ist, das den folgenden Strukturen entspricht: 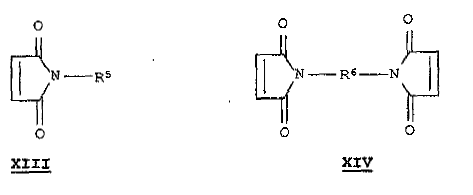 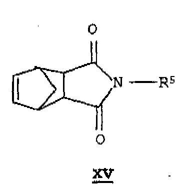 und 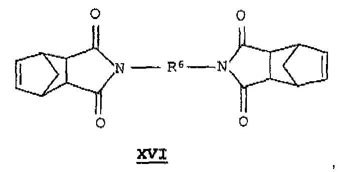 wobei R⁵ und R⁶ ausgewählt sind aus Alkyl, Aryl und Vitro, Hydroxy- und Alkylderivaten davon, Cycloalkyl-, Aralkyl- und Alkarylgruppen, die etwa 6 bis 100 Kohlenstoffatome
enthalten, wobei jede davon substituiert beziehungsweise unterbrochen sein kann durch Silan, Silikon, Sauerstoff, Halogen, Carbonyl, Hydroxyl, Ester, Carbonsäure, Harnstoff, Urethan, Carbamat, Schwefel, Sulfonat oder Sulfon.

5. Eine wie in Anspruch 4 beanspruchte anaerob härtende Zusammensetzung, wobei R⁶ die Gruppe 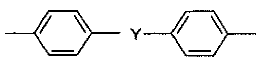 bedeutet, wobei die Phenylgruppen an einer oder mehreren Positionen substituiert sind mit linearen, verzweigten oder cyclischen Alkyl-, Alkenyl-, Alkinyl-, Alkoxy- oder Arylgruppen mit 1 bis 20 Kohlenstoffatomen, mit oder ohne Substitution durch Halogen, Hydroxy, Nitril, Ester, Amid oder Sulfat, und Y bedeutet: O, S, Carbonyl, Sulfon oder primäre oder sekundäre Methylengruppen, substituiert mit linearen, verzweigten oder cyclischen Alkyl-, Alkenyl-, Alkinyl-, Alkoxy- oder Arylgruppen mit 1 bis 20 Kohlenstoffatomen, mit oder ohne Substitution durch Halogen, Hydroxy, Nitril, Ester, Amid oder Sulfat.

6. Eine wie in Anspruch 1 beanspruchte anaerob härtende Zusammensetzung, wobei die weitere Komponente (d) eine Mono- oder Polyhydroxyalkankomponente (d₂) ist.

7. Eine wie in Anspruch 1 beanspruchte anaerob härtende Zusammensetzung, wobei die weitere Komponente (d) eine Plastifizierungsmittelkomponente (d₃) ist.

## Revendications

1. Composition à durcissement anaérobie comprenant :
(a) une silicone fluide formée en tant que produit réactionnel d'au moins un premier silane de formule, RₙSi(X)₄₋ₙ, où les groupes R peuvent être identiques ou différents et choisis parmi le groupe consistant en hydrogène, C₁-C₁₂ allyle, C₆-C₁₂ aryle, C₇-C₁₈ arylalkyle, C₇-C₁₈ alkylaryle, haloalkyle, haloaryle et radicaux monovalents à insaturation éhylénique à l'exclusion des groupes fonctionnels (méth)acryloxy, X est une fonctionnalité hydrolysable, et n est un entier de 0 à 3, et au moins un deuxième silane de formule, R¹ₘR²ₚSi (X) ₄₋₍ₘ₊ₚ₎, où R¹ est un groupe fonctionnel (méth)acrylique et R² peut être identique ou différent et est un élément choisi parmi le groupe consistant en radicaux monovalents à insaturation éthylénique, hydrogène, C₁-C₁₂ alkyle, C₆-C₁₂ aryle, C₇-C₁₃ arylalkyle, et C₇-C₁₈ alkylaryle, X est une fonctionnalité hydrolysable, m est un entier de 1 à 3, et m+p est un entier de 1 à 3 ;
(b) un composant (méth)acrylate ;
(c) un composant induisant le durcissement anaérobie, et
(d) un autre composant choisi parmi
(d₁) un composant maléimide ;
(d₂) un composant mono- ou poly-hydroxyalcane ; et
(d₃) un composant plastifiant.

2. Composition à durcissement anaérobie selon la revendication 1, où l'autre composant (d) est (d₁) un composant maléimide.

3. Composition à durcissement anaérobie selon la revendication 2, où le composant maléimide (d₁) est un maléimide qui reste sensiblement un composant n'ayant pas réagi à température ambiante mais devient réactif à des températures de 163°C et plus.

4. Composition à durcissement anaérobie selon la revendication 2, où le composant maléimide (d₁) est un maléimide selon les structures suivantes : 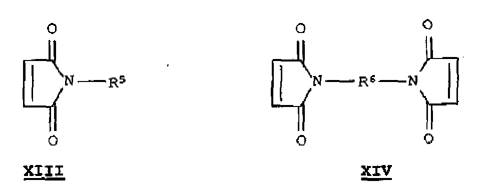 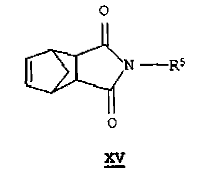 et 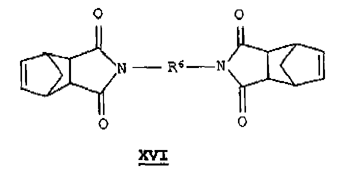 où R⁵ et R⁶ sont choisis parmi les groupes alkyle, aryle, et nitro, hydroxyle et ses dérivés alkyles, cycloalkyle, aralkyle et alkaryle, qui contiennent environ 6 à 100 atomes de carbone, l'un quelconque parmi eux pouvant être substitué ou interrompu éventuellement par un silane, silicone, oxygène, halogène, carbonyle, hydroxyle, ester, acide carboxylique, urée, uréthane, carbamate, soufre, sulfonate ou sulfone.

5. Composition à durcissement anaérobie selon la revendication 4, où R⁶ représente le groupe 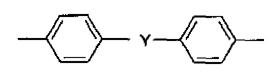 où les groupes phényle sont substitués à une ou plusieurs positions avec des groupes alkyle, alcényle, alcynyle, alcoxy, ou aryle linéaire, ramifié ou cyclique ayant de 1 à 20 atomes de carbone, avec ou sans substitution par un halogène, hydroxy, nitrile, ester, amide ou sulfate; et Y représente O, S, carbonyle, sulfone, ou des groupes méthylène primaire ou secondaire substitués avec des groupes alkyle, alcényle, alcynyle, alcoxy ou aryle linéaire, ramifié ou cyclique ayant de 1 à 20 atomes de carbone, avec ou sans substitution par un halogène, hydroxy, nitrile, ester, amide ou sulfate.

6. Composition à durcissement anaérobie selon la revendication 1, où l'autre composant (d) est (d₂) un composant mono- ou poly-hydroxyalcane.

7. Composition à durcissement anaérobie selon la revendication 1, où l'autre composant (d) est (d₃) un composant plastifiant.
